(19) Europäisches Patentamt
European Patent Office
Office européen des brevets

(11) EP 1 704 985 A1

(12) EUROPEAN PATENT APPLICATION
published in accordance with Art. 158(3) EPC

(43) Date of publication:
27.09.2006 Bulletin 2006/39

(51) Int Cl.:
*B29C 47/88* (2006.01)    *B29C 47/92* (2006.01)
*B29C 47/08* (2006.01)    *B29L 7/00* (2006.01)

(21) Application number: 04819771.9

(22) Date of filing: 24.11.2004

(86) International application number:
PCT/JP2004/017391

(87) International publication number:
WO 2005/053932 (16.06.2005 Gazette 2005/24)

(84) Designated Contracting States:
AT BE BG CH CY CZ DE DK EE ES FI FR GB GR
HU IE IS IT LI LU MC NL PL PT RO SE SI SK TR

(30) Priority: 04.12.2003 JP 2003406305
04.12.2003 JP 2003406291
04.12.2003 JP 2003406290

(71) Applicant: Toyo Boseki Kabushiki Kaisha
Osaka-shi, Osaka 530-8230 (JP)

(72) Inventors:
• MATSUOKA, Mikio
c/o Toyo Boseki Kabushiki Kaisha
Fukui 914-0047 (JP)

• TAKEUCHI, Kunio
c/o Toyo Boseki Kabushiki Kaisha
Inuyama-shi,
Aichi 484-8508 (JP)

• SHIROEDA, Terumoto
c/o Toyo Boseki Kabushiki Kaish
Fukui 914-0047 (JP)

• HASHIMOTO, Yoshiharu
c/o Toyo Boseki Kabushiki
Fukui 914-0047 (JP)

(74) Representative: Weber, Thomas et al
Deichmannhaus am Dom
Postfach 10 22 41
50462 Köln (DE)

(54) SHEET MANUFACTURING APPARATUS AND MANUFACTURING METHOD

(57) [Summary]
[Problem] Proper cooling of a molten sheet product by bringing the sheet into close contact with a movable cooling member, by properly charging over the whole width of the molten sheet product extruded on the movable cooling member.

[Solving Means] A sheet production apparatus comprising an extruder 3 to extrude a thermoplastic resin having a melt specific resistance value of not less than $0.3 \times 10^8$ ($\Omega \cdot$cm), a movable cooling member 5, and a tape electrode 10, which has a constitution including a center support member 24 to support the center 12 of the electrode in a linearly stretch state, an ear portion supporting member 26 to support an ear portion of the electrode 13 shifted to the downstream side in the sheet transport direction, a pair of displacement amount adjust mechanisms to adjust a displacement amount X of the above-mentioned ear portion of the electrode 13, and a travel drive mechanism to run the tape electrode 10 along the width direction $\alpha$ of the molten sheet product 4a, and a production method thereof.

FIG. 3

**Description**

The present invention provides an apparatus for producing sheets, which is used for extruding a thermoplastic resin in a molten state from an extruder to give a sheet, and cooling the molten sheet product by bringing the product into close contact with a movable cooling member to give a sheet having a uniform thickness and less surface defects, and a production method of the sheet.

**BACKGROUND OF THE INVENTION**

Conventionally, a sheet having a uniform thickness and a uniform width is formed by extruding a thermoplastic resin in a molten state from a T die of an extruder and the like to give a sheet on a movable cooling member and efficiently cooling the sheet. For example, as shown in patent reference 1, a molten sheet product is brought into close contact with a movable cooling member with a static charge by applying a high voltage to a wire or knife edge electrode disposed along a movable cooling member. When a molten sheet product is constituted to be brought into static close contact with a movable cooling member as above using a wire or knife edge electrode, a molten sheet product can be efficiently cooled by properly bringing the product into close contact with a movable cooling member by setting a take-up speed of the molten sheet product by the movable cooling member to a relatively low speed of about 25 m/min.

In addition, to efficiently cool a molten sheet product by properly bringing the product into close contact with a movable cooling member, by setting a take-up speed of the molten sheet product by a movable cooling member to a relatively high speed of about 40 m/min, for example, as shown in patent reference 2, the molten sheet product is brought into static close contact with the movable cooling member by highly charging the above-mentioned molten sheet product by way of streamer corona discharge from a needle, saw, wire or knife edge electrode.

Moreover, for example, a failure in close contact of a molten sheet product due to attachment of an impurity such as a sublimation product and the like with an electrode and the like is prevented by, as shown in patent reference 3, using a metal foil tape having at least one side formed like a saw as an electrode to statically charging a molten sheet product made of a thermoplastic resin film, extending a part of the metal foil tape to the above-mentioned molten sheet product in the transverse direction (width direction), and removing the used portion of the metal foil tape while supplying an unused portion of the metal tape continuously or intermittently.

Furthermore, it is known that when the melt specific resistance of a thermoplastic resin constituting a molten sheet product is set to a low level by adding an alkali metal, an alkaline earth metal or at least one kind of compounds thereof to a polyester resin and the like, as shown in, for example, patent reference 4, the moving speed of the above-mentioned movable cooling member during cooling of a molten sheet product is brought into static close contact with a movable cooling member can be largely increased by application of a high voltage to an electrode.

[patent reference 1] JP-B-37-6142
[patent reference 2] JP-A-56-105930
[patent reference 3] JP-A-1-283124
[patent reference 4] JP-B-53-40231

**BRIEF DESCRIPTION OF THE DRAWINGS**

[Fig. 1] A figure explaining the whole constitution of the production method of a sheet of an embodiment of the present invention.
[Fig. 2] A side view showing how a tape electrode is installed.
[Fig. 3] A front view showing a concrete constitution of the tape electrode.
[Fig. 4] A plan view showing how a tape electrode is installed.
[Fig. 5] A front view showing how a tape electrode is installed.
[Fig. 6] A front view showing a concrete constitution of a guide roller.
[Fig. 7] A front view showing another embodiment of the tape electrode.
[Fig. 8] A front view showing still another embodiment of the tape electrode.
[Fig. 9] A front view showing yet another embodiment of the tape electrode.
[Fig. 10] A front view showing still another embodiment of the tape electrode.
[Fig. 11] A front view showing a concrete constitution of a control part.
[Fig. 12] A block view showing a concrete constitution of a control unit.

**Explanation of Symbols**

| 3 | extruder |
|---|---|
| 4a | molten sheet product |
| 5 | movable cooling member |
| 6 | corona discharge part |
| 10 | tape electrode |
| 10a | protrusion |
| 12 | center of electrode |
| 13 | ear portion of electrode |
| 18 | feed part |
| 21 | take-up part |
| 24 | center support member |
| 26 | ear portion adjusting guide (ear portion supporting member) |
| 27 | insulator |

**Disclosure of the Invention**

Problems to be Solved by the Invention

According to a static contact method disclosed in the above-mentioned patent reference 1 using a wire or knife edge electrode, when the take-up speed of the molten sheet product by a movable cooling member is largely increased to not less than 25 m/min, close contact of a molten sheet product to the above-mentioned movable cooling member becomes insufficient due to the presence of an air film formed by an associated flow produced on the surface of a movable cooling member, and the cooling action of the molten sheet product by the movable cooling member comes to be impaired. As a result, crystallization of the molten sheet product proceeds before it is sufficiently cooled, and the sheet is associated with problems in that the transparency is degraded, air foam-like or line-like defects easily occur on the sheet surface, and its thickness tends to be non-uniform because the molten sheet product is not evenly cooled.

According to the static contact method comprising, as shown in the above-mentioned patent reference 1, undercurrent or glow corona discharge using a wire electrode or knife edge electrode, forming of a sheet does not change very much between voltage regulation that controls application voltage on the electrode, and current regulation that controls the electric current from an electrode to a molten sheet product, since the electric current flowing from the electrode to the molten sheet product is very small. In contrast, when the streamer corona discharge shown in the above-mentioned patent reference 2 is performed, a slight change in voltage in the above-mentioned regulation of the application voltage on electrode tends to cause an extreme change in the above-mentioned electric current, since a high electric current flows from an electrode to a molten sheet product, the above-mentioned voltage regulation method is problematic in that close contact of the molten sheet product to the movable cooling member markedly varies to allow changes in the sheet thickness, which in turn causes easy variation of the sheet width.

On the other hand, when the current regulation that controls the electric current from an electrode to a molten sheet product is performed during the above-mentioned streamer corona discharge, it is possible to stabilize contact force of a molten sheet product and produce a sheet having a uniform thickness, during stationary production when the take-up speed of the molten sheet product by a movable cooling member becomes constant. However, when the constant current regulation that controls the electric current from an electrode to a molten sheet product to settle at a given level is performed in the sheet production start time and the like, when the extrusion rate of a molten sheet product from an extruder markedly changes and the take-up speed of the molten sheet product by a movable cooling member changes, the discharge becomes extremely unstable, resulting from the above-mentioned change in the take-up speed.

That is, as the above-mentioned take-up speed of the molten sheet product by a movable cooling member changes, the contact point between a molten sheet product and a movable cooling member shifts in response to the change, the distance between the above-mentioned electrode and a molten sheet product changes, and when the above-mentioned constant current regulation that controls the electric current from an electrode to a molten sheet product to settle at a given level is performed in this state, the application voltage on the electrode might become extremely high to possibly develop spark discharge, which in turn may problematically cause adverse effects of breakage of the molten sheet product, damage of the movable cooling member and the like.

In addition, when the above-mentioned take-up speed and application voltage change, a molten sheet product is easily vibrated in the air before contact with a movable cooling member, which further unstabilizes the above-mentioned state of discharge. To prevent such adverse effects, the energizing electric current may be frequently adjusted in response to the above-mentioned changes in the take-up speed in the production start time and the like of a molten sheet product that shows remarkably changing take-up speed. However, there is a problem of extremely difficult adjustment of the energizing electric current to a proper level.

The present invention has been made in view of the foregoing aspects, and provides a sheet production apparatus capable of properly producing a sheet having a uniform thickness at a high speed, by properly charging over the whole width of a molten sheet product extruded on a movable cooling member, and properly cooling the molten sheet product by bringing the sheet into close contact with the movable cooling member, and a production method thereof.

In the static contact method of the streamer corona discharge method disclosed in the above-mentioned patent reference 2, moreover, only polyamide resins having a melt specific resistance value of not more than $6.0 \times 10^6$ ($\Omega \cdot$cm) and the like can efficiently cool a molten sheet product by bringing the sheet into close contact with a movable cooling member, and, for example, polyethylene terephthalate having a melt specific resistance value of about $0.4 \times 10^8$ ($\Omega \cdot$cm) and the like have been understood not to permit stable streamer corona discharge. To be specific, the above-mentioned streamer corona discharge enables stronger static contact of a molten sheet product to a movable cooling member, because a high electric current is flown to the molten sheet product by setting appropriate conditions therefor affording stable state of discharge, as compared to conventional apparatuses wherein a molten sheet product is brought into static close contact with a movable cooling member by glow corona discharge. On the other hand, when a starting material has a high melt specific resistance value, an excess electric current flows during the above-mentioned streamer corona discharge, thus easily developing spark discharge, and stable streamer corona discharge is difficult.

Particularly, when a molten sheet product has a large width size, such as not less than 500 mm, corona discharge cannot be easily developed on both sides (sheet ear portion) of a molten sheet product, and the contact force of the sheet ear portion to a movable cooling member becomes weak to allow easy occurrence of problematic air foam-like or line-like defects. As a result of intensive studies of the cause thereof, it has been clarified that a large width of a molten sheet product permits a large amount of the air to be pushed out from the center of a movable cooling member toward the outside during contact of the molten sheet product with the cooling member, which in turn causes curling of ear portion of the molten sheet product.

When the ear portion of a molten sheet product is curled upward as mentioned above, the contact point with a movable cooling member shifts from the center to the downstream side in the sheet transport direction. As a result, when an electrode is installed in line with the position of contact between the center of the molten sheet product and the movable cooling member, streamer corona discharge cannot be properly developed at the above-mentioned contact point of the sheet ear portion. As a result, the static contact force of the above-mentioned ear portion to the movable cooling member is degraded and a cooling effect is lost because the air is caught between the molten sheet product and the movable cooling member.

Furthermore, to improve close contact of the above-mentioned sheet ear portion, an electrode may be placed closer to a molten sheet product in the vicinity of the contact point between the ear portion of the molten sheet product and a movable cooling member, thereby decreasing the gap between them and increasing the amount of electric charge of the molten sheet product. In this constitution, the electrode and the movable cooling member come too close to each other and discharge easily occurs between them. As a result, the amount of electric charge on the ear portion of a molten sheet product decreases and the contact force of the sheet is more degraded.

As shown in the above-mentioned patent reference 3, when an electrode made of a metal foil tape is set along the width direction of a molten sheet product to allow continuous or intermittent running of the tape, drive mechanism of the electrode needs to be installed in the outside of the side end portion of the molten sheet product. Therefore, the installment length of the electrode becomes larger than the width of the molten sheet product, and a discharge phenomenon is particularly easily developed on the side of the movable cooling member.

In a sheet production apparatus having a constitution wherein an electrode runs along the width direction of a molten sheet product due to a drive mechanism disposed outside the side end portion of the molten sheet product, as mentioned above, an insulation member may be installed between the ear portion of an electrode and the surface in the side of a movable cooling member, to prevent direct discharge from the ear portion of an electrode to the movable cooling member. In this case, however, an insulation member disposed in the vicinity of the ear portion of a molten sheet product that curls in response to the air pushed out from the center of the molten sheet product to the outside needs to be set apart from the sheet ear portion to prevent them from contacting each other. Moreover, a constitution to run an electrode at a position apart from an insulation member by a given distance is necessary, so that a contact between an insulation member and the electrode during running of the above-mentioned electrode can be prevented. As a result, the distance between the center of the molten sheet product and the electrode inevitably becomes considerably large, which in turn makes it difficult to form an appropriate amount of an electric charge over the whole width of a molten sheet product.

As shown in the above-mentioned patent reference 4, a constitution wherein a molten sheet product is efficiently cooled by bringing the molten sheet into close contact with a movable cooling member based on an ensured contact force between the product and the member, while increasing the moving speed of the product and the member by mixing an additive such as an alkali metal and the like with a thermoplastic resin, which is a starting material for the sheet, to lower the melt specific resistance value of the molten sheet product, is associated with a problem in that the absence of foreign substance, tone, heat resistance and the like that are inherently possessed by the starting material need to be sacrificed to a certain degree so as to lower the above-mentioned melt specific resistance value of the molten sheet product.

In addition, as disclosed in the above-mentioned patent references 2, 4, a thermoplastic resin having a low melt specific resistance value is used as a starting material of a sheet, since spark discharge tends to be easily produced because the electric current flowing from an electrode to a movable cooling member becomes too large, the development of the above-mentioned spark discharge needs to be prevented by setting the electrode at an upstream of the above-mentioned contact point between a molten sheet product with the movable cooling member and the like. When an electrode is disposed upstream of the contact point between a molten sheet product and a movable cooling member, the molten sheet product is vibrated and easily damaged on touching the electrode. To prevent this, the molten sheet product and the electrode should be set apart by a certain distance. When an electrode is set apart from the molten sheet product as above, the voltage to be applied between them needs to be set high to ensure stable development of the above-mentioned streamer corona discharge.

The present invention has been made in view of the foregoing aspects, and provides a sheet production apparatus capable of properly producing a sheet having a uniform thickness at a high speed, by properly charging over the whole width of a molten sheet product extruded on a movable cooling member, and properly cooling the molten sheet product by bringing the sheet into close contact with the movable cooling member, and a production method thereof.

**Means of Solving the Problems**

The invention relating to claim 1 provides a sheet production apparatus comprising an extruder to extrude, in a sheet state, a thermoplastic resin having a melt specific resistance value of not less than $0.3 \times 10^8$ ($\Omega\cdot$cm) in a molten state, and a movable cooling member for cooling the molten sheet product extruded from the extruder. It has a constitution where a tape electrode having a thickness of 5 $\mu$m-200 $\mu$m and multiple protrusions having a protrusion amount of not less than 0.1 mm, which are formed in the tip portion, is installed along the contact point between the molten sheet product and the movable cooling member, and the molten sheet product is brought into static close contact with the movable cooling member by streamer corona discharge from the above-mentioned tape electrode to the molten sheet product. The apparatus comprises a center support member to support the center of the tape electrode disposed at the above-mentioned center of the molten sheet product, said center of the tape electrode being stretched linearly along the width direction of the molten sheet product; an ear portion supporting member to support the ear portion of a tape electrode present at the both side portion sides of the above-mentioned molten sheet product, said ear portion being shifted to the downstream side in the molten sheet product transport direction from the center of the electrode; a pair of displacement amount adjusting mechanism to adjust the displacement amount of the ear portion of the electrode to the above-mentioned downstream side in the sheet transport direction; and a travel drive mechanism to run the tape electrode along the width direction of a molten sheet product by winding a tape electrode fed from a feed part formed in one side end part of the movable cooling member, at a take-up part formed in the other side end part of the movable cooling member.

The invention relating to claim 2 provides the sheet production apparatus described in the above-mentioned claim 1, wherein the gap between the tape electrode and the molten sheet product is set within the range of 0.5 mm - 10 mm.

The invention relating to claim 3 provides the sheet production apparatus described in the above-mentioned claim 1 or 2, wherein the interval between adjacent protrusions is set to less than 5 times the above-mentioned gap between the tape electrode and the molten sheet product.

The invention relating to claim 4 provides the sheet production apparatus described in any one of the above-mentioned claims 1 to 3, wherein the length of the center of the electrode disposed linearly along the width direction of the molten sheet product changes in response to the width of the molten sheet product.

The invention relating to claim 5 provides, the sheet production apparatus described in any one of the above-mentioned claims 1 to 4, wherein an insulator to prevent discharge from the ear portion of the tape electrode to the movable cooling member is installed between the ear portion of the electrode and the movable cooling member.

The invention relating to claim 6 provides the sheet production apparatus described in any one of the above-mentioned claims 1 to 5, wherein the tape electrode is run along the width direction of the molten sheet product with a tension applied to the tape electrode by the travel drive means within the range of 5%-95% of the cleavage strength.

The invention relating to claim 7 provides a production method of a sheet, comprising an extrusion step to extrude, in a sheet state, a thermoplastic resin having a melt specific resistance value of not less than $0.3 \times 10^8$ ($\Omega$.cm) in a molten state from an extruder, a cooling step to cool the molten sheet product extruded from the extruder by bringing it into close contact with a movable cooling member, and a draw step to draw the sheet product after cooling, for bringing the molten sheet product into static close contact with the movable cooling member by performing streamer corona discharge on the molten sheet product in the above-mentioned cooling step, from a tape electrode having a thickness of 5 μm-200 μm and multiple protrusions having a protrusion amount of not less than 0.1 mm, formed in the tip portion, which is installed along the contact point between the above-mentioned molten sheet product and the movable cooling member. The center of the tape electrode disposed at the above-mentioned center of the molten sheet product is stretched linearly along the width direction of the molten sheet product, the ear portion of the tape electrode present at the both side portion sides of the above-mentioned molten sheet product is supported with said ear portion being shifted to the downstream side in the molten sheet product-transport direction from the center of the electrode and the above-mentioned streamer corona discharge is applied while running the tape electrode along the width direction of a molten sheet product by winding the tape electrode fed from a feed part formed in one side end part of the movable cooling member, at a take-up part formed in the other side end part of the movable cooling member.

The invention relating to claim 8 provides a sheet production apparatus comprising an extruder to extrude, in a sheet state, a thermoplastic resin having a melt specific resistance value of not less than $0.3 \times 10^8$ (Ω.cm) in a molten state, a movable cooling member for cooling the molten sheet product extruded from the extruder, and an electrode disposed along the contact point between the molten sheet product and the movable cooling member. It has a constitution where the molten sheet product is brought into static close contact with the movable cooling member by streamer corona discharge from the above-mentioned tape electrode to the molten sheet product. The apparatus comprises a static contact control means to control at least one of the control objects of an extrusion amount of the thermoplastic resin material extruded from the above-mentioned extruder, the electric current flown from the above-mentioned electrode to the molten sheet product, the voltage to be applied to the electrode, the gap between the electrode and the movable cooling member or an installation position of the electrode and the like, in response to the take-up speed of the molten sheet product by the above-mentioned movable cooling member.

The invention relating to claim 9 provides control by a static contact control means using the sheet production apparatus described in the above-mentioned claim 8, which comprises preparing a corresponding Table of a take-up speed of the molten sheet product and the optimal value of the control object, based on the experiments previously performed, and reading the optimal value of the control object corresponding to the take-up speed of the molten sheet product at the present time point from the corresponding Table.

The invention relating to claim 10 provides a sheet production apparatus comprising an extruder to extrude, in a sheet state, a thermoplastic resin having a melt specific resistance value of not less than $0.3 \times 10^8$ (Ω·cm) in a molten state, a movable cooling member for cooling the molten sheet product extruded from the extruder, and an electrode disposed along the contact point between the molten sheet product and the movable cooling member. It has a constitution where the molten sheet product is brought into static close contact with the movable cooling member by streamer corona discharge from the above-mentioned tape electrode to the molten sheet product. The apparatus comprises a voltage regulation means to control a voltage to be applied to the electrode, a current regulation means to control an energizing electric current from the above-mentioned electrode to the molten sheet product, and a regulation means to switch between a voltage regulation state by the above-mentioned voltage regulation means and a current regulation state by the current regulation means depending on the above-mentioned take-up speed of the molten sheet product by the movable cooling member.

The invention relating to claim 11 provides the sheet production apparatus described in the above-mentioned claim 1, wherein, when the take-up speed of the molten sheet product by a movable cooling member changes, a regulation state of the application voltage by the voltage regulation means is employed, and when the above-mentioned molten sheet product is taken up at a constant speed, a current regulation state by the current regulation means is employed.

The invention relating to claim 12 provides a production method of a sheet, comprising an extrusion step to extrude, in a sheet state, a thermoplastic resin having a melt specific resistance value of not less than $0.3 \times 10^8$ (Ω.cm) in a molten state from an extruder, a cooling step to cool the molten sheet product extruded from the extruder by bringing it into close contact with a movable cooling member, and a draw step to draw the sheet product after cooling, for bringing the molten sheet product into static close contact with the movable cooling member by performing streamer corona discharge on the molten sheet product in the above-mentioned cooling step, from an electrode installed along the contact point between the above-mentioned molten sheet product and the movable cooling member. A current regulation to control the energizing electric current from the above-mentioned electrode to the molten sheet product is applied after voltage regulation to control the voltage applied to the above-mentioned electrode in the sheet production start time, and at the time point when the sheet shifts into a stationary production state.

The invention relating to claim 13 provides a sheet production apparatus comprising an extruder to extrude, in a sheet state, a thermoplastic resin having a melt specific resistance value of not less than $0.3 \times 10^8$ (Ω.cm) in a molten state, a movable cooling member for cooling the molten sheet product extruded from the extruder, and a corona discharge part for bringing the molten sheet product into static close contact with the movable cooling member by applying streamer corona discharge to a molten sheet product. A tape electrode having a thickness of 5 μm-200 μm is

formed in the above-mentioned corona discharge part, the tape electrode is installed along the vicinity of the contact point between the above-mentioned molten sheet product and the movable cooling member, the gap between the tape electrode and the molten sheet product is set within the range of 0.5 mm - 10 mm, multiple protrusions having a protrusion amount of not less than 0.1 mm are arranged along the direction perpendicular to the transport direction of the above-mentioned molten sheet product, on the tip of the above-mentioned tape electrode, and the interval between adjacent protrusions is set to less than 5 times the above-mentioned gap between the tape electrode and the molten sheet product.

The invention relating to claim 14 provides the sheet production apparatus described in the above-mentioned claim 1, wherein dispersion in the protrusion amount of respective protrusions formed in the tape electrode is set to less than 0.2 mm.

The invention relating to claim 15 provides the sheet production apparatus described in the above-mentioned claim 13 or 14, wherein an amount of misalignment between the contact point between the molten sheet product and the movable cooling member, and the installation position of the tape electrode in the sheet transport direction is set to less than 5 mm.

The invention relating to claim 16 provides a sheet production method, comprising an extrusion step to extrude, in a sheet state, a thermoplastic resin having a melt specific resistance value of $0.3 \times 10^8$ ($\Omega \cdot$cm) in a molten state from an extruder, cooling the molten sheet product extruded from the extruder, by bringing it into close contact with a movable cooling member, and a draw step to draw the sheet product after cooling. A tape electrode having a thickness of 5 $\mu$m-200 $\mu$m is installed along the vicinity of the contact point between the above-mentioned molten sheet product and the movable cooling member, and streamer corona discharge is applied to a molten sheet product in the above-mentioned cooling step from a corona discharge part wherein the gap between the tape electrode and the molten sheet product is set within the range of 0.5 mm - 10 mm, multiple protrusions having a protrusion amount of not less than 0.1 mm are arranged at the tip of the above-mentioned tape electrode, along the direction perpendicular to the transport direction of the above-mentioned molten sheet product, and the interval between adjacent protrusions is set to less than 5 times the above-mentioned gap between the tape electrode and the molten sheet product, whereby the molten sheet product is cooled by bringing it into close contact with the movable cooling member.

**Effects of the Invention**

According to the invention of claim 1, the above-mentioned ear portion of a tape electrode can be accurately face the contact point between the movable cooling member and the molten sheet product by disposing the center of the tape electrode linearly along the width direction of the molten sheet product, disposing the ear portion of a tape electrode such that it is shifted to the downstream side of the above-mentioned center in the molten sheet product-transport direction, and adjusting the amount of shift of the ear portion of the electrode to the downstream side in the transport direction according to the moving speed and width size and the like of the molten sheet product.

Therefore, by properly applying streamer corona discharge, wherein a high electric current is flown to a molten sheet product from each protrusion formed in the above-mentioned tape electrode, over the entire area in the width direction of the sheet, a high electric charge can be applied stably and continuously to a molten sheet product made of a thermoplastic resin having a melt specific resistance value of not less than $0.3 \times 10^8$ ($\Omega \cdot$cm). Even when the moving speed of the above-mentioned molten sheet product and the movable cooling member is set high, a sheet having a uniform thickness and free of surface defects can be produced efficiently and properly at a high speed by equally cooling the molten sheet product by properly bringing the sheet into close contact with the movable cooling member, while effectively suppressing the development of spark discharge. Moreover, since the tape electrode is made to run along the width direction of the molten sheet product with the ear portion of a tape electrode shifted to the downstream side in the molten sheet product-transport direction, the development of close contact failure due to the attachment of impurities such as sublimation product and the like to an electrode and the like can be advantageously prevented by always disposing a new tape electrode along the width direction of the molten sheet product, while effectively preventing the occurrence of contact of the tape electrode to the molten sheet product.

According to the invention of claim 2, since the streamer corona discharge is applied while the gap between the tape electrode and the molten sheet product is set to a given range, and streamer corona discharge can be uniformly applied to the molten sheet product from plural protrusions formed on the tape electrode, without setting the voltage applied between the tape electrode and the movable cooling member to an excessively high value.

According to the invention of claim 3, by setting the interval between adjacent protrusions formed on the above-mentioned tape electrode to less than 5 times the above-mentioned gap between the tape electrode and the molten sheet product, the interval between adjacent discharge parts can be effectively prevented from becoming extremely large during streamer corona discharge to a molten sheet product from respective protrusions of the tape electrode, and more uniform streamer corona discharge can be achieved.

According to the invention of claim 4, when the width of the molten sheet product varies due to an increase or decrease in the take-up speed by a movable cooling member and the like, by changing the length of the center of the electrode in response to the changes in the width, both the center and ear portion of the tape electrode can be made to accurately face the contact point between the movable cooling member and the molten sheet product and the streamer corona discharge can be properly applied to the entire area of the molten sheet product.

According to the invention of claim 5, since direct discharge from the ear portion of the electrode toward a movable cooling member is prevented by installing an insulator between the ear portion of a tape electrode and a movable cooling member, insufficient amount of electric charge to be applied to the ear portion of a molten sheet product can be effectively prevented, and the above-mentioned tape electrode can approach the contact point between the movable cooling member and the molten sheet product, while preventing a contact of the tape electrode with an insulator disposed between the above-mentioned ear portion of the electrode and the movable cooling member, by shifting the ear portion of a tape electrode to the downstream side in the molten sheet product-transport direction.

According to the invention of claim 6, since the tape electrode is run along the width direction of the molten sheet product while applying an appropriate tension to the tape electrode, the above-mentioned tape electrode can be made to run stably while preventing cleavage of the tape electrode.

According to the invention of claim 7, since the tape electrode is run along the width direction of the molten sheet product, while linearly installing the center of the tape electrode along the width direction of a molten sheet product, installing the ear portion of a tape electrode such that it is shifted to the downstream side of the above-mentioned center in the molten sheet product-transport direction, accurately facing the above-mentioned ear portion of a tape electrode with the contact point between the movable cooling member and the molten sheet product, and shifting the ear portion of the tape electrode to the downstream side in the molten sheet product-transport direction, streamer corona discharge, wherein a high electric current is flown to a molten sheet product from each protrusion formed in the above-mentioned tape electrode, can be properly performed over the entire area of the molten sheet product by always disposing a new tape electrode along the width direction of the molten sheet product, while effectively preventing the occurrence of contact of the tape electrode to the molten sheet product.

Accordingly, a high electric charge can be applied stably and continuously to a molten sheet product made of a thermoplastic resin having a melt specific resistance value of not less than $0.3 \times 10^8$ ($\Omega$.cm), and even when the moving speed of the above-mentioned molten sheet product and the movable cooling member is set high, a sheet having a uniform thickness and free of surface defects can be advantageously produced efficiently and properly at a high speed by equally cooling the molten sheet product by properly bringing the sheet into close contact with the movable cooling member, while effectively suppressing the development of spark discharge.

According to the invention of claim 8, by applying streamer corona discharge to a molten sheet product made of a thermoplastic resin having a melt specific resistance value of not less than $0.3 \times 10^8$ ($\Omega$·cm), from an electrode, at least one of the control objects of an extrusion amount of a thermoplastic resin material extruded from an extruder, the electric current flown from the above-mentioned electrode to the molten sheet product, the voltage to be applied to the electrode, the gap between the electrode and the movable cooling member or an installation position of the electrode and the like is controlled by the above-mentioned static contact control means, during cooling of a molten sheet product by properly bringing the sheet into close contact with the above-mentioned movable cooling member. Therefore, streamer corona discharge where a high electric current is flown from the above-mentioned electrode can be easily and properly applied along the contact point between a molten sheet product and a movable cooling member.

As a result, a high electric charge can be applied stably and continuously to a molten sheet product made of the above-mentioned thermoplastic resin having a melt specific resistance value, even when the moving speed of the above-mentioned molten sheet product and the movable cooling member is set to a high speed, a sheet having a uniform thickness and free of surface defects can be produced efficiently and properly at a high speed, by equally cooling the molten sheet product by properly bringing the sheet into close contact with the movable cooling member, while effectively suppressing the development of spark discharge.

According to the invention of claim 9, by applying streamer corona discharge to a molten sheet product made of a thermoplastic resin having a melt specific resistance value of not less than $0.3 \times 10^8$ ($\Omega$·cm) from an electrode, the molten sheet product can be equally cooled by properly bringing the sheet into close contact with the movable cooling member, by reading the optimal value of the control object corresponding to the take-up speed of the molten sheet product at the present time point, from a corresponding Table of a take-up speed of the molten sheet product and the optimal value of the control object and controlling the control object to match the optimal value during cooling of a molten sheet product by properly bringing the sheet into close contact with the above-mentioned movable cooling member, and a sheet having a uniform thickness and free of surface defects can be advantageously produced efficiently and properly at a high speed.

According to the invention of claim 10, by applying streamer corona discharge to a molten sheet product made of a thermoplastic resin having a melt specific resistance value of not less than $0.3 \times 10^8$ ($\Omega$·cm) from an electrode, a voltage regulation state by the above-mentioned voltage regulation means and a current regulation state by the current regulation means can be switched according to the above-mentioned take-up speed of the molten sheet product by a movable cooling member, during cooling of a molten sheet product by properly bringing the sheet into close contact with the above-mentioned movable cooling member. Therefore, by controlling the application voltage to the above-mentioned electrode during low speed take-up when the take-up speed of the molten sheet product by a movable cooling member easily changes and the like, extreme instability of the state of discharge due to the changes in the above-mentioned take-up speed can be effectively prevented, and stable streamer corona discharge can be applied. Moreover, by switching to an electric amount regulation state where an energizing electric current to the molten sheet product from the above-mentioned electrode is controlled, during high speed take-up when a take-up speed of the molten sheet product by a movable cooling member is relatively stable and the like, remarkable variation in the contact force of the molten sheet product to the movable cooling member can be suppressed and sheet thickness can be made even, as well as changes in the sheet width can be advantageously prevented effectively.

According to the invention of claim 11, by controlling the application voltage to the above-mentioned electrode in the sheet production start time when the take-up speed of the molten sheet product by a movable cooling member tends to easily change and the like, the state of discharge can be effectively prevented from becoming extremely unstable due to the changes in the take-up speed, and stable streamer corona discharge can be applied and, by controlling the energizing electric current from the above-mentioned electrode to the molten sheet product during stationary production when the take-up speed of the molten sheet product by a movable cooling member is relatively stable and the like, remarkable variation in the contact force of the molten sheet product to the movable cooling member can be suppressed, the sheet thickness can be made even, and changes in the sheet width can be effectively prevented.

According to the invention of claim 12, by controlling the application voltage to the above-mentioned electrode in the sheet production start time when the take-up speed of the molten sheet product by a movable cooling member tends to easily change, and by controlling the energizing electric current to the molten sheet product from the above-mentioned electrode during stationary production when the take-up speed of the molten sheet product by a movable cooling member is relatively stable, a high electric charge can be applied stably and continuously to a molten sheet product made of a thermoplastic resin having a melt specific resistance value of not less than $0.3 \times 10^8$ ($\Omega$.cm), and even when the moving speed of the above-mentioned molten sheet product and a movable cooling member is set high, a sheet having a uniform thickness and free of surface defects can be advantageously produced efficiently and properly at a high speed by equally cooling the molten sheet product by properly bringing the sheet into close contact with the movable cooling member, while effectively suppressing spark discharge.

According to the invention of claim 13, by applying streamer corona discharge where a high electric current is flown to a molten sheet product, by applying a given voltage between the tape electrode and the movable cooling member from respective protrusions of the tape electrode, a high electric charge can be stably and continuously applied to a molten sheet product made of a thermoplastic resin having a melt specific resistance value of not less than $0.3 \times 10^8$ ($\Omega$.cm). Therefore, even when the moving speed of the above-mentioned molten sheet product and a movable cooling member is set high, the molten sheet product can be equally cooled by properly bringing the sheet into close contact with the movable cooling member. As a result, by mixing a given additive with a thermoplastic resin, which is a starting material of the sheet, a sheet having a uniform thickness and free of surface defects can be advantageously produced at a high speed and efficiently, without the problems of degradation of properties inherently possessed by the starting material, such as the absence of foreign substance, tone, heat resistance and the like.

According to the invention of claim 14, by setting the dispersion in the protrusion amount of respective protrusions formed in the tape electrode to less than 0.2 mm, nonuniform the gap between the tape electrode and the molten sheet product can be prevented. Therefore, streamer corona discharge can be applied uniformly to a molten sheet product from the tip of the tape electrode. Consequently, a molten sheet product can be properly and effectively cooled by properly and bringing the molten sheet into close contact with a movable cooling member, by continuously applying a high electric charge to a molten sheet product, without setting the voltage applied between the above-mentioned tape electrode and the movable cooling member to an excessively high value.

According to the invention of claim 15, adverse effects such as unstable streamer corona discharge, rough surface of a sheet and the like, due to disposition of the installation position of the tape electrode to the upstream in the molten sheet product-transport direction by not less than 5 mm from the contact point between a molten sheet product and a movable cooling member, can be prevented. In addition, adverse effects of unattainable proper and close contact of a molten sheet product to a movable cooling member, due to disposition of the installation position of the tape electrode to the downstream side in the molten sheet product-transport direction by not less than 5 mm from the contact point between a molten sheet product and a movable cooling member, can be advantageously prevented effectively.

According to the invention of claim 16, by applying streamer corona discharge where a high electric current is flown to a molten sheet product from respective protrusions of the tape electrode, by applying a given voltage between the tape electrode and the movable cooling member, in a cooling step to cool the molten sheet product extruded from the extruder by bringing it into close contact with a movable cooling member, a high electric charge can be stably and continuously applied to a molten sheet product made of a thermoplastic resin having a melt specific resistance value of not less than $0.3 \times 10^8$ ($\Omega$·cm). Therefore, a molten sheet product can be equally cooled by bringing the sheet into close contact with a movable cooling member properly, while setting the moving speed of the above-mentioned molten sheet product and a movable cooling member high, and a sheet having a uniform thickness and free of surface defects can be advantageously produced efficiently at a high speed.

**Best Mode for Embodying the Invention**

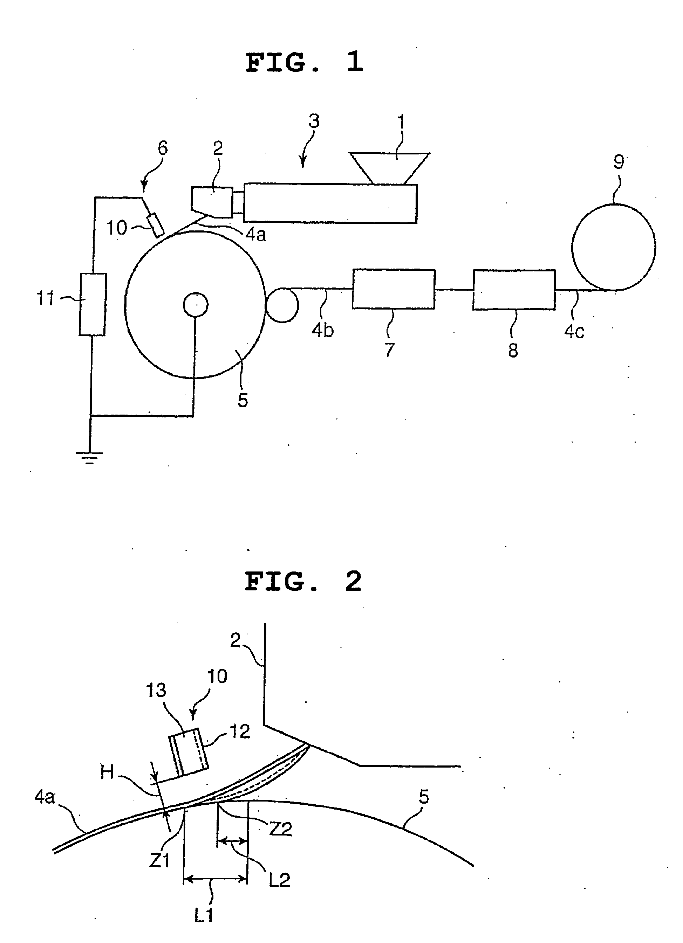

Fig. 1 shows an embodiment of the sheet production apparatus of the present invention. The production apparatus comprises an extruder 3 to extrude a thermoplastic resin material fed from a hopper 1 in a molten state by kneading with heating the resin, from a spinneret 2 made of T die etc. in a sheet state, a movable cooling member 5 comprising a cooling roller etc. to cool the molten sheet product 4a extruded from the extruder 3, a streamer corona discharge part 6 to bring the molten sheet product 4a into close contact with a movable cooling member 5 by streamer corona discharge of the above-mentioned molten sheet product 4a, the first drawing part 7 for drawing a sheet product 4b cooled by the above-mentioned movable cooling member 5 in the longitudinal direction or width direction, the second drawing part 8 for drawing the above-mentioned sheet product 4b in the width direction or longitudinal direction, and a take-up roll 9 for winding a sheet 4c after drawing.

As shown in Figs. 2-1, 2-2 to Fig. 3, the above-mentioned streamer corona discharge part 6 comprises a tape electrode 10 installed along the vicinity of the contact point of the molten sheet product 4a with the surface of the movable cooling member 5. The tape electrode 10 is made of a metal material such as iron, stainless steel and the like, and the tip thereof, or an end on the side opposite to the surface of the above-mentioned molten sheet product 4a, and plural protrusions 10a having a given protrusion amount J are formed in the direction perpendicular to the transport direction of the molten sheet product 4a at a given interval (arrangement pitch) W by forming rectangular notches at given intervals and the like. In addition, protrusions 10a of the above-mentioned tape electrode 10 are formed to face the molten sheet product 4a on the movable cooling member 5 at a given interval H. The distance between the protrusion of the electrode when a long side of the tape electrode is moved to be superimposed on a straight line connecting the contact point Z of the molten sheet product 4a with the surface of the movable cooling member 5 and the rotation center axis of the movable cooling member 5 and the contact point is taken as an interval H.

When a given voltage is applied between tape electrode 10 having the above-mentioned constitution and the movable cooling member 5 from a DC high-voltage power supply 11, and streamer corona discharge is applied to the molten sheet product 4a on the movable cooling member 5 from the above-mentioned tape electrode 10, a high electric charge is continuously applied and the above-mentioned molten sheet product 4a is brought into static close contact with the movable cooling member 5.

The above-mentioned streamer corona discharge means the state where, for example, tape electrode 10 on which a positive voltage is applied and the molten sheet product 4a (ground) are bridged to perform a stable corona discharge. In other words, when the voltage to be applied between the above-mentioned tape electrode 10 and the movable cooling member 5 is increased, undercurrent state (discharge phenomenon free of sustainability) first occurs, then glow corona discharge state appears, and then the air is ionized by the discharge from the above-mentioned tape electrode 10 to reach the streamer corona discharge where stable electric current is continuously flown. When the voltage is increased from this state, the state of spark discharge occurs.

When the above-mentioned respective discharge phenomena is seen from the relationship between the voltage and the electric current, undercurrent region comprises a minute electric current region where the Ohm's law stands, or a region where electric current flows in proportion to the voltage, and a region where the electric current does not increase even when the voltage is increased. When the voltage is further increased from this region, the electric current rapidly increases, which region is a glow corona discharge region where purple luminescence covering the surface of the electrode is observed. When the voltage is further increased from this glow corona discharge region, streamer corona discharge is achieved, where luminescence bridging the electrode and the ground can be observed. When the relationship between the voltage to be applied to the electrode V (kV) and electric current value I (mA/cm) corresponding to the width of the sheet product (ground) is concretely seen, region of $I < 0.025 \times V - 0.12$ is a undercurrent region or glow corona discharge region, and region of $I \geq 0.025 \times V - 0.12$ is a streamer corona discharge region.

As mentioned above, streamer corona discharge is applied to the molten sheet product 4a extruded from the extruder 3 on the movable cooling member 5 from the tape electrode 10 of the above-mentioned corona discharge part 6 to apply a large amount of electric charge to the above-mentioned molten sheet product 4a. As a result, the molten sheet product 4a is brought into static close contact with the movable cooling member 5, and the heat exchange occurs with the cooling medium supplied to the movable cooling member 5, such as cooling water and the like, whereby the above-mentioned molten sheet product 4a is cooled.

The thickness of the above-mentioned tape electrode 10 is set within the range of 5 $\mu$m-200 $\mu$m, and a preferably range thereof is 10 $\mu$m-100 $\mu$m. When the thickness of the above-mentioned tape electrode 10 becomes not more than 5 $\mu$m, the strength thereof decreases and the electrode becomes easily broken. When the thickness of the above-mentioned tape electrode 10 becomes not less than 200 $\mu$m, the concentration of the electric field decreases to make it difficult to apply streamer corona discharge properly. For efficient development of streamer corona discharge by increasing the concentration of the electric field at the tip portion of the above-mentioned tape electrode 10, the protrusion amount J of the above-mentioned protrusion 10a needs to be set to not less than 0.1 mm. The protrusion amount J is preferably set to not less than 0.5 mm, more preferably not less than 1 mm. While the maximum value of the above-mentioned protrusion amount J is not particularly limited, when it exceeds 20 mm, a functional merit of increasing the concentration of the electric field cannot be enhanced much, and the width of the above-mentioned tape electrode 10 needs to be increased more than necessary. Thus, the above-mentioned protrusion amount is preferably set to not more than 20 mm from the economical aspect.

When the contact force F [Pa] of the molten sheet product 4a to the above-mentioned movable cooling member 5 is considered as a coulomb force, it is expressed by the following formula. In the following formula, q is electric charge [C] on a sheet, E is the electric field [V/m] of the sheet, S is a sheet area [cm2] defined by the length and width of the sheet that moves per unit time (1 s), i is an electric current [A] flowing through a static contact electrode, V is the voltage [V] to be applied to the electrode, v is the moving speed [m/s] of movable member cooling 5, w is the width [m] of the sheet cooled by static contact, k is the electric field concentration [l/m] defined by the formula: k=E/V, which is determined by analytic calculation in the case of a simple shape and by numeral calculation by finite element method in the case of a complicated shape.

$$F[Pa]=q[C] \times E[V/m]/S[cm^2]$$
$$=i \cdot V \cdot k/(v \cdot w)[Pa]$$

From the above-mentioned formula, it is known that static contact of the molten sheet product 4a to the movable cooling member 5 is determined according to the voltage V applied to the electrode, electric current i and the electric field concentration k, and static contact F can be increased by raising the electric field concentration k.

In addition, when the gap H between the above-mentioned tape electrode 10 and the molten sheet product 4a becomes less than a given level, the tip portion of the tape electrode 10 contacts the molten sheet product 4a to possibly damage the molten sheet product 4a, and when the above-mentioned gap H becomes not less than a given level, the application voltage to properly develop the streamer corona discharge needs to be made considerably high, and the spark discharge inevitably occurs easily. Therefore, the gap H between the above-mentioned tape electrode 10 and the molten sheet product 4a is set within the range of 0.5 mm - 10 mm.

When the installation interval W of the above-mentioned protrusion 10a arranged in the direction perpendicular to the transport direction of the above-mentioned molten sheet product 4a becomes not less than a given level, the discharge interval from each protrusion 10a of the tape electrode 10 to the molten sheet product 4a becomes too wide and a line-like close contact failure tends to be easily formed therein. To prevent such adverse effect, the above-mentioned installation interval W needs to be set to less than 5 times the gap H between the tape electrode 10 and the molten sheet product 4a. When the installation interval W between adjacent protrusions 10a formed in the above-mentioned tape electrode 10 is reduced, formation of protrusions 10a becomes difficult and effective corona discharge from all protrusions 10a also becomes difficult. Therefore, a preferable range of the above-mentioned installation interval W is within the range of 0.1 to 3 times the gap H between the tape electrode 10 and the molten sheet product 4a, more preferably within the range of 0.2 to 2 times the above-mentioned gap H.

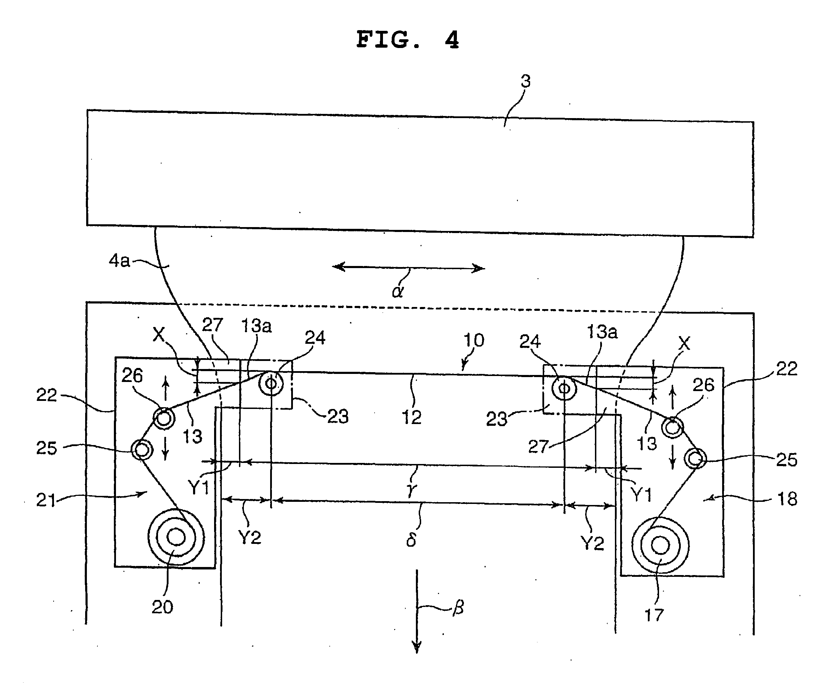

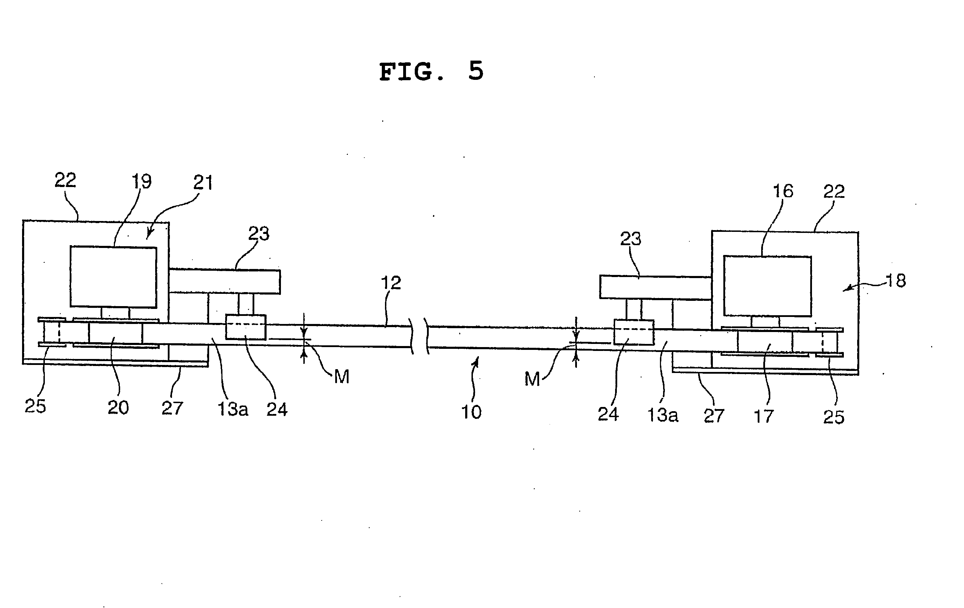

As shown in Fig. 4 and Fig. 5, the above-mentioned tape electrode 10 is installed such that the center (hereinafter to be referred to as the center of the electrode) 12 is on a straight line along the width direction (directions of arrow α) of the molten sheet product 4a, and outward portion (hereinafter to be referred to as electrode outward portion) 13 of tape electrode 10 positioned outward side thereof is the downstream side of the molten sheet product 4a in the transport direction (direction of arrow β). Furthermore, the tape electrode 10 is given a certain tension by the travel drive mechanism comprising the following brake motor 16 and take-up motor 19, and constituted to run in the width direction α of the molten sheet product 4a.

That is, a feed part 18 having a brake motor 16 and a feeding roller 17 is installed on one side end portion of the above-mentioned movable cooling member 5, and a take-up part 21 having a take-up motor 19 and a take-up roller 20 is installed on the other side end portion of the movable cooling member 5. Then, the above-mentioned brake motor 16 and take-up motor 19 are activated and a tape electrode 10 is fed from feeding roller 17 of the feed part 18, along with which the above-mentioned tape electrode 10 is taken up by the take-up roller 20 of the take-up part 21, and the tape electrode 10 runs along the width direction (directions of arrow α) of the molten sheet product 4a. In addition, by setting the drive torque of the above-mentioned take-up motor 19 to a value greater than the drive torque of the brake motor 16, a given tension is applied to the tape electrode 10 during drive of the tape electrode 10.

The both drive units 22 housing the above-mentioned feed part 18 and take-up part 21 each provide a attachment plate 23 in a protruding condition. The attachment plate 23 rotatably comprises a center support member 24 consisting of a guide roller and the center support member 24 supports the tape electrode 10. As a result, the center 12 of the electrode located on the center side of the molten sheet product 4a is linearly set along the width direction $\alpha$ of the molten sheet product 4a. On the outward side of the above-mentioned center support member 24 is installed a outward portion support member 25 comprising a guide roller rotatably supported at the downstream side of the transport direction $\beta$. of the molten sheet product 4a, the above-mentioned electrode 1 outward portion 13 is supported by the outward portion support member 25, whereby a right-and-left pair of electrode outward portions 13 extend to the oblique downstream side of the transport direction $\beta$ of the molten sheet product 4a.

An ear portion adjust guide 26 comprising a guide roller is rotatably supported between the above-mentioned center support member 24 and the outward portion support member 25. The ear portion adjust guide 26 is slidably supported along the transport direction $\beta$ of the molten sheet product 4a and made to slidably drive to the upstream side or downstream side in the sheet transport direction $\beta$ by a displacement amount adjust mechanism consisting of an actuator (not shown). In addition, the distance X between the above-mentioned center 12 of the electrode in the transport direction $\beta$ of the molten sheet product 4a and the below-mentioned ear portion 13a of the electrode is constituted to allow adjustment in response to the slide displacement of the above-mentioned ear portion adjust guide 26.

The both drive units 22 housing the above-mentioned feed part 18 and take-up part 21 are slidably supported by a guide member (not shown) along the width direction $\alpha$ of the molten sheet product 4a and made to slidably drive in the sheet width direction $\alpha$ by an actuator (not shown). Furthermore, by slidably driving the above-mentioned both drive units 22 in the direction approaching or setting apart the center support member 24 on the above-mentioned feed part 18 side and the center support member 24 on the take-up part 21 side, the length $\delta$ of the above-mentioned center 12 of the electrode linearly set along the width direction $\alpha$ of the molten sheet product 4a changes.

The both drive units 22 housing the above-mentioned feed part 18 and take-up part 21 are moved up and down by the actuator (not shown), whereby the gap H between the above-mentioned tape electrode 10 and the molten sheet product 4a can be adjusted. When the gap H becomes less than a given level, the tip portion of the tape electrode 10 contacts the molten sheet product 4a to possibly damage the molten sheet product 4a, and when the above-mentioned gap H becomes not less than a certain level, the application voltage to properly develop streamer corona discharge needs to be increased considerably, which inevitably facilitates occurrence of spark discharge. Therefore, the gap H between the above-mentioned tape electrode 10 and the molten sheet product 4a is preferably adjusted to fall within the range of 0.5 mm - 10 mm by moving the above-mentioned both drive units 22 up and down.

When the installation interval W of the above-mentioned protrusions 10a arranged in the direction perpendicular to the transport direction of the above-mentioned molten sheet product 4a becomes not less than a certain level, discharge interval from each protrusion 10a of the tape electrode 10 to the molten sheet product 4a becomes too far and a line-like close contact failure tends to be easily developed then. To prevent such adverse effects, the above-mentioned installation interval W needs to be set to less than 5 times the gap H between the tape electrode 10 and the molten sheet product 4a. When the installation interval W of the adjacent protrusions 10a formed on the above-mentioned tape electrode 10 is small, forming of the protrusions 10a becomes difficult and development of effective corona discharge from all the protrusion 10a becomes difficult. A preferable range of the above-mentioned installation interval W is within the range of 0.1 to 3 times the gap H between the tape electrode 10 and the molten sheet product 4a, more preferably within the range of 0.2 to 2 times the above-mentioned gap H.

To prevent direct discharge from the electrode outward portion 13 to the movable cooling member 5, an insulator 27 made of an insulating plate material is installed on the lower side of the above-mentioned drive unit 22, whereby the discharge range $\gamma$ acting as a tape electrode 10 is defined to correspond to the width of the molten sheet product 4a. To be specific, when the electrode outward portion 13 included in the above-mentioned discharge range $\gamma$ is defined to be an ear portion 13a of the electrode, its outer end position is defined by the inner end position of the above-mentioned insulator 27.

While the material of the guide rollers constituting the center support member 24, the ear portion adjust guide 26 and the like is not particularly limited, it is preferable to constitute each of the above-mentioned guide rollers from an insulating material such as fluororesin, polyimide, ceramic and the like or metallic materials, to ensure heat resistance and accuracy. When a metallic material is used, it is preferable to cover the surface facing the above-mentioned tape electrode 10 with an insulating material to prevent disturbance of streamer corona discharge to the molten sheet product 4a. When there is no risk of disturbance of the above-mentioned streamer corona discharge due to the positional relationship between the above-mentioned guide roller and tape electrode 10, it is not necessary to cover a guide roller made from metallic material with the above-mentioned insulating material.

The positional relationship in the upward-downward direction between a guide roller constituting the above-mentioned center support member 24 and the thereby supported tape electrode 10 is set such that the lower end of the tape electrode 10 protrudes downward by a given distance M from the bottom surface of the above-mentioned center support member 24 (see Fig. 5). The protrusion amount of the tape electrode 10 corresponding to the distance M is preferably within the range of 0.3 mm - 5 mm, more preferably within the range of 0.5 mm - 3 mm. When the above-mentioned distance M is less than 0.3 mm, its lower end cannot protrude downward from the bottom surface of the above-mentioned center support member 24 during driving of the tape electrode 10, and streamer corona discharge to the molten sheet product 4a is possibly inhibited. On the other hand, when the protrusion amount (distance M) exceeds 5 mm, the tape electrode 10 easily falls off from the above-mentioned center support member 24 due to the tension during driving of the above-mentioned tape electrode 10.

When the width of the above-mentioned tape electrode 10 is narrow, maintenance of running stability during running of the tape electrode 10 along the guide rollers constituting the center support member 24, ear portion adjust guide 26 and the like becomes difficult, and tape electrode 10 is inevitably easily broken due to the tension on the above-mentioned tape electrode 10. Conversely, when the width of the tape electrode 10 is wider than necessary, no function merit is offered but a demerit of bulky apparatus is caused. Therefore, the width of the above-mentioned tape electrode 10 is preferably set to fall within the range of 5 mm - 30 mm, more preferably within the range of 10 mm - 20 mm.

In addition, the side end position of the ear portion 13 of the electrode represented by the distance Y1 between the right-left both side end portions of the discharge range $\gamma$ of the above-mentioned tape electrode 10 and the side end portion of the molten sheet product 4a is preferably not less than 3 mm, more preferably within the range of 10 mm - 20 mm. When the above-mentioned distance Y1 is short and the above-mentioned application voltage is increased as the sheet take-up speed by the movable cooling member 5 becomes fast, the possibility of direct discharge from the tape electrode 10 to the movable cooling member 5 becomes high. When the above-mentioned distance Y1 becomes greater than 20 mm, the amount of electric charge applied to the side portion (sheet ear portion) of the above-mentioned molten sheet product 4a becomes insufficient and line-like defects are formed in the sheet ear portion, cooling of the sheet ear portion becomes insufficient to easily cause whitening of crystal, and the sheet tends to easily break during the draw step.

A preferable range of the side end position Y2 of the center 12 of the electrode as represented by the distance between the side end portion of the molten sheet product 4a and the center 12 of the electrode is 30 mm - 120 mm, more preferably 40 mm - 100 mm. When the above-mentioned center of the electrode side end position Y2 is less than 30 mm, it is not possible to sufficiently adjust the distance X between the above-mentioned center 12 of the electrode and an ear portion 13a of the electrode in the transport direction $\beta$ of the molten sheet product 4a, or the displacement amount of the ear portion 13a of the electrode to the downstream side in the sheet transport direction, even when the above-mentioned ear portion adjust guide 26 is slidably displaced. When the above-mentioned center of the electrode side end position Y2 is greater than 120 mm, the distance X between the above-mentioned center 12 of the electrode and an ear portion 13a of the electrode in the transport direction $\beta$ of the molten sheet product 4a extremely changes as the above-mentioned ear portion adjust guide 26 is slidably displaced, and accurate adjustment thereof becomes difficult. Therefore, the side end position of the ear portion 13a of the electrode is adjusted to fall within the above-mentioned range by slide displacement of the above-mentioned drive unit 22 in the sheet width direction $\alpha$.

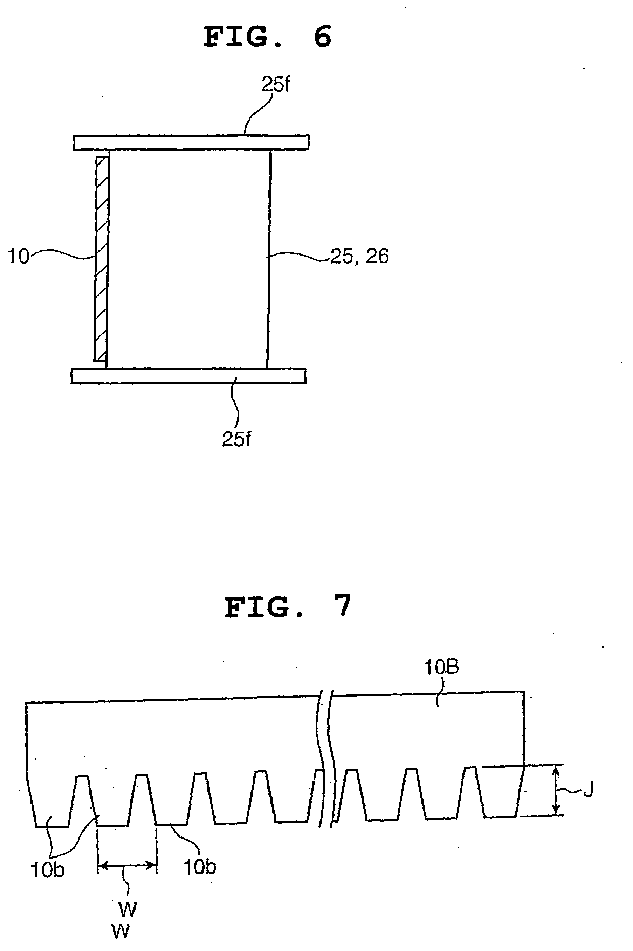

The guide roller constituting the above-mentioned outward portion support member 25 and ear portion adjust guide 26 consists of a grooved roller having a flange 25f on the top and bottom, as shown in Fig. 6, and constituted to define its upward-downward movement by the both flanges 25f during driving of the above-mentioned tape electrode 10. The feeding roller 17 and take-up roller 20 formed in the above-mentioned feed part 18 and take-up part 21 are also grooved rollers having flanges on the top and bottom as in the above-mentioned guide roller.

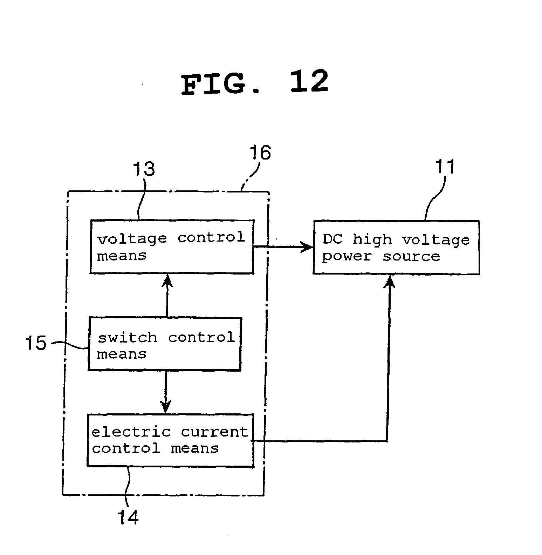

The above-mentioned sheet production apparatus preferably comprises, as shown in Fig. 11, a speed control means 28 to control the take-up speed of the molten sheet product 4a by the above-mentioned movable cooling member 5, and a static contact control means 29 to control a control object consisting of energizing electric current from the tape electrode 10 to the molten sheet product 4a during the above-mentioned streamer corona discharge or installation position of the tape electrode 10 etc., so as to properly set the static contact of the molten sheet product 4a according to the take-up speed of the molten sheet product 4a, which is controlled by the speed control means 28.

For the production apparatus to produce a sheet by polymerizing thermoplastic resins each extruded in a molten state from plural extruders 3, for example, as shown in Table 1, extrusion amount Q1-Qm (kg/h) of the thermoplastic resin from each extruder 3, the sheet width direction position Y of the tape electrode 10 relative to the standard coordinate point previously set, the sheet transport direction position L of the tape electrode 10 relative to the standard coordinate point previously set, the displacement amount X of the ear portion 13a of the electrode in the sheet transport direction $\beta$, the gap H between the tape electrode 10 and the molten sheet product 4a, energizing electric current A from the tape electrode 10 to the molten sheet product 4a, and the like are considered to be the control objects. Then, each of the above-mentioned optimal values of the control object according to the take-up speed of the above-mentioned molten sheet product 4a are determined by previous experiments, a corresponding Table of the control factor comprising the take-up speed K of the molten sheet product 4a and each optimal value of the control object is prepared based on the experiment data, as shown in the following Table 1 and, by reading each of the above-mentioned optimal values of the control object corresponding to the current take-up speed K of the molten sheet product 4a from the corresponding Table, control by the above-mentioned static contact control means 29 is effected.

Table 1

| item | unit | value 1 | value 2 | value 3 | | value n |
|---|---|---|---|---|---|---|
| take-up speed K | (m/min) | K1 | K2 | K3 | | Kn |
| thermoreversible resin extrusion amount (Q1) | (kg/h) | Q11 | Q12 | Q13 | | Q1n |
| thermoreversible resin extrusion amount (Q2) | (kg/h) | Q21 | Q22 | Q23 | | Q2n |
| . . . . . | | | | | | |
| thermoreversible resin extrusion amount (Qm) | (kg/h) | Qm1 | Qm2 | Qm3 | | Qmn |
| electrode side end position (Y) | (mm) | Y1 | Y2 | Y3 | | Yn |
| electrode back and forth position (L) | (mm) | L1 | L2 | L3 | | Ln |
| ear portion displacement amount (X) | (mm) | X1 | X2 | X3 | | Xn |
| interval (H) | (mm) | H1 | H2 | H3 | | Hn |
| electric current set value (A) | (mA) | A1 | A2 | A3 | | An |

For example, when the current take-up speed of K1 is confirmed by the output signals from the speed control means 28, Q11-Q1m (kg/h) is read as the extrusion amount of the above-mentioned thermoplastic resin from the corresponding Table shown in Table 1, and the control signals corresponding to these values are output to each extruder 3 and the like, whereby the control to adjust the extrusion amount of each extruder 3 to Q11-Q1m (kg/h) is executed by the static contact control means 29. In addition, Y1, L1 as the sheet width direction position and sheet transport direction position of the tape electrode 10, relative to the standard coordinate point, are read from the above-mentioned corresponding Table based on the above-mentioned take-up speed K1, and the control signals corresponding to these values are output to the right-left drive actuator 22a and back and forth drive actuator 22b of the above-mentioned drive unit 22, whereby the control to adjust the sheet width direction position and sheet transport direction position of the tape electrode 10, relative to the above-mentioned standard coordinate point, to L1, Y1, respectively, is executed by slidable driving of the drive unit 22 along the sheet width direction α and sheet transport direction β.

Furthermore, based on the above-mentioned take-up speed K1, the displacement amount of the ear portion 13a of the electrode in the sheet transport direction of X1 is read from the above-mentioned corresponding Table, and the control signals corresponding to the above-mentioned displacement amount X1 are output to the ear portion drive actuator 26a that slidably drives the above-mentioned ear portion adjust guide 26 in the sheet width direction α to cause slidable driving of the ear portion adjust guide 26 in the sheet transport direction, whereby the control to adjust the displacement amount of the ear portion 13a of the electrode in the sheet transport direction to X1 is executed, and H1 as the gap between the tape electrode 10 and the molten sheet product 4a is read from the above-mentioned corresponding Table, and the control signals corresponding to the value are output to the up-and-down movement drive actuator 22c of the drive unit 22 to move the above-mentioned tape electrode 10 up and down, whereby the control to adjust the gap between the tape electrode 10 and the movable cooling member 5 to H1 is executed.

Furthermore, based on the above-mentioned take-up speed K1, an energizing electric current from the tape electrode 10 to the molten sheet product 4a of A1 is read from the above-mentioned corresponding Table, and the control signals corresponding to the value is output to the DC high-voltage power supply 11, whereby the control to adjust the electric current from the DC high-voltage power supply 11 via the above-mentioned tape electrode 10 to the molten sheet product 4a to A1 is executed during streamer corona discharge.

Concretely, streamer corona discharge is applied in the sheet production start time when an extrusion amount of a thermoplastic resin material extruded from the above-mentioned extruder 3 is adjusted to not more than half the amount during stationary production, by setting the take-up speed of the molten sheet product 4a by the above-mentioned movable cooling member 5 to a low speed of about 20 m/min, bringing the tip portion of the tape electrode 10 closer to the above-mentioned contact point Z to adjust the gap H between the contact point Z of the molten sheet product 4a to the above-mentioned movable cooling member 5 and the tape electrode 10 to, for example, about 5 mm, and setting the electric current flown from the above-mentioned DC high-voltage power supply 11 via the tape electrode 10 to the molten sheet product 4a to about 4.5 mA. Under this conditions, uniform streamer corona discharge is unattainable, and foam-like defects and line-like defects are observed in the molten sheet product 4a.

Then, the above-mentioned speed control means 28 controls to sequentially increasing the take-up speed of the molten sheet product 4a per given time from the above-mentioned level and, based on the take-up speed, the static contact control means 29 automatically adjusts the control objects such as an extrusion amount of a thermoplastic resin material to be extruded from the above-mentioned extruder 3, electric current flown from the above-mentioned tape electrode 10 to the molten sheet product 4a, the gap H between the tape electrode 10 and the molten sheet product 4a, installation position of tape electrode 10 and the like to optimal values. For example, control is performed wherein, as shown in Table 2, the above-mentioned take-up speed is sequentially increased from 30 m/min to 90 m/min at 10 m/min unit over a given time (variation time) and, in accordance therewith, the control object of energizing electric current is sequentially increased from 10 mA to 58 mA. Instead of the embodiment shown in the above-mentioned Table 2, in which the take-up speed is increased over a given time per a given speed (10 m/min), the take-up speed may be increased by a given speed per a given time.

When uniform streamer corona discharge is applied as mentioned above to increase the contact force of the molten sheet product 4a to the movable cooling member 5, the above-mentioned foam-like defects and line-like defects disappear and the above-mentioned molten sheet product 4a was brought into static close contact with the movable cooling member 5 and effectively cooled. A positive electrode of the DC high-voltage power supply 11 is connected to the above-mentioned tape electrode 10 and a negative electrode of the DC high-voltage power supply 11 is connected to the movable cooling member 5. In the above-mentioned sheet production apparatus, moreover, as shown in Fig. 12, a voltage regulation means 13 to control an application voltage to be applied to the tape electrode 10 from the DC high-voltage power supply 11, a current regulation means 14 to control the energizing electric current flown from the above-mentioned from the tape electrode 10 to the molten sheet product 4a, and a control unit 16 comprising a switch control means 15 to switch between the voltage regulation state by the above-mentioned voltage regulation means 13 and the current regulation state by the current regulation means 14 by the operation of a worker according to the take-up speed of the molten sheet product 4a by the movable cooling member 5 are preferably installed.

Concretely, streamer corona discharge is applied in the sheet production start time when an extrusion amount of a thermoplastic resin material extruded from the above-mentioned extruder 3 is adjusted to not more than half the amount during stationary production, by setting the take-up speed of the molten sheet product 4a by the above-mentioned movable cooling member 5 to a low speed of not more than 10 m/min, bringing the tip portion of the tape electrode 10 closer to the above-mentioned contact point Z to adjust the gap H between the contact point Z of the molten sheet product 4a to the above-mentioned movable cooling member 5 and the tape electrode 10 to a proper value of not more than 10 mm (e.g., about 5 mm), and the take-up of the molten sheet product 4a is started with the take-up speed of the molten sheet product 4a by the movable cooling member 5 of as low as not more than 10 m/min.

Then streamer corona discharge is applied as the above-mentioned take-up speed is gradually increased, while performing the voltage regulation to gradually increase the application voltage to be applied to the tape electrode 10 from the above-mentioned DC high-voltage power supply 11 with the target application voltage of 4 kV - 6 kV. Under this condition, uniform streamer corona discharge is unattainable, and foam-like defects and line-like defects are observed in the molten sheet product 4a. Then, the take-up speed of the above-mentioned molten sheet product 4a reaches the stationary production speed of, for example, about 60 m/min, the application voltage is increased to 7 kV - 10 kV while maintaining the take-up speed.

Since uniform streamer corona discharge is applied as the increase of the above-mentioned application voltage, the contact force of the molten sheet product 4a to the movable cooling member 5 increases and the above-mentioned foam-like defects and line-like defects disappear. At this time point, the voltage regulation state by the above-mentioned voltage regulation means 13 is switched to a current regulation state by the current regulation means 14, and the electric current value at the time point of the above-mentioned disappearance of defects is maintained. In this way, streamer corona discharge is applied from the above-mentioned tape electrode 10 to the molten sheet product 4a on the movable cooling member 5 and a high electric charge is continuously applied, whereby the above-mentioned molten sheet product 4a is brought into static close contact with the movable cooling member 5.

In a sheet production apparatus comprising an extruder 3 to extrude, in a sheet state, a thermoplastic resin having a melt specific resistance value of not less than $0.3 \times 10^8$ ($\Omega \cdot$cm) in a molten state, movable cooling member 5 cooling the molten sheet product 4a extruded from the extruder 3, and a tape electrode 10 disposed along the contact point Z of the molten sheet product 4a with the movable cooling member 5, a voltage regulation means 13 to control an application voltage to the above-mentioned tape electrode 10, and a current regulation means 14 to control an energizing electric current to the molten sheet product 4a from the above-mentioned tape electrode 10 are installed, since the voltage regulation state by the above-mentioned voltage regulation means 13 and the current regulation state by the current regulation means 14 are switched over according to the above-mentioned take-up speed of the molten sheet product 4a by the movable cooling member 5, in the constitution where streamer corona discharge is applied from the above-mentioned tape electrode 10 to the molten sheet product 4a to bring the molten sheet product 4a into static close contact with the movable cooling member 5, a sheet having a uniform thickness and free of surface defects can be advantageously produced efficiently at a high speed by setting a high sheet take-up speed by the above-mentioned movable cooling member 5 and equally cooling the molten sheet product 4a by properly bringing the product into static close contact with the movable cooling member 5.

For example, in the sheet production start time when an extrusion amount of a thermoplastic resin material to be excluded from the extruder 3 is smaller than that in the stationary production, control to gradually increase the above-mentioned low take-up speed of the molten sheet product 4a by the movable cooling member 5 is performed and, by the application of voltage regulation by the above-mentioned voltage regulation means 13, unstable state of discharge due to changes in the above-mentioned take-up speed can be avoided and stable streamer corona discharge can be applied.

That is, when the application voltage on the tape electrode 10 is controlled to be maintained at a previously determined target value in the above-mentioned sheet production start time, the amount of a thermoplastic resin material to be fed to the above-mentioned contact point Z per unit time increases as the take-up speed of the molten sheet product 4a increases. Thus, the electric current to be flown to the above-mentioned molten sheet product 4a increases. Therefore, the above-mentioned streamer corona discharge can be properly applied without developing spark discharge due to an extremely increased application voltage mentioned above, as if a constant current regulation was performed, wherein the application voltage to the tape electrode 10 is changed according to the variation in the contact point position of the molten sheet product 4a to the movable cooling member 5, as the take-up speed of the above-mentioned molten sheet product 4a increases, whereby the above-mentioned energizing electric current is maintained at a constant level. Even when the molten sheet product 4a is vibrated in the air before contact with the movable cooling member 5, as the above-mentioned take-up speed and application voltage change, instability of the above-mentioned state of discharge can be effectively prevented. Moreover, since the energizing electric current does not need to be frequently adjusted in response to the change in the above-mentioned take-up speed, the above-mentioned voltage regulation can be easily performed.

During stationary take-up and the like when the above-mentioned take-up speed of the molten sheet product 4a by the movable cooling member 5 becomes constant, the condition is switched to a current regulation state where an energizing electric current from the above-mentioned tape electrode 10 to the molten sheet product 4a is controlled. A phenomenon where an energizing electric current on the molten sheet product 4a remarkably changes in response to a minor adjustment of the application voltage does not occur, as if voltage regulation was performed where the application voltage to the above-mentioned tape electrode 10 is controlled. Therefore, sheet thickness can be made even while maintaining a constant level of the contact force of the molten sheet product 4a to the movable cooling member 5, and changes in the sheet width can be advantageously prevented effectively.

In the above-mentioned embodiment, the application voltage was controlled by the above-mentioned voltage regulation means 13 in the sheet production start time when the take-up speed of the molten sheet product 4a by the movable cooling member 5 needs to be gradually increased from a low speed. To change the width, thickness and the like of the sheet during stationary production, the control of the energizing electric current by the above-mentioned current regulation means 14 may be switched to the control of the application voltage by the above-mentioned voltage regulation means 13, when the above-mentioned take-up speed of the molten sheet product by a movable cooling member temporarily changed.

In the above-mentioned embodiment, a tape electrode 10 having a thickness of 5 $\mu$m - 200 $\mu$m is installed along the vicinity of the contact point Z of the molten sheet product 4a with the movable cooling member 5, and plural protrusions 10a having a protrusion amount J of not less than 0.1 mm were formed in the tip portion of the tape electrode 10. Therefore, by concentrating the electric field to the protrusion 10a, the above-mentioned molten sheet product 4a can be brought into static close contact with the movable cooling member 5 by properly applying a low voltage streamer corona discharge to the molten sheet product 4a. Consequently, the molten sheet product 4a can be effectively cooled without adverse effects of opaque sheet surface due to rough surface, formation of foam-like or line-like faults on the sheet surface due to partial capture of the air between the above-mentioned molten sheet product 4a and the movable cooling member 5 and the like.

Moreover, by installing the tape electrode 10 in the vicinity of the contact point Z of the molten sheet product 4a that does not vibrate easily due to close contact of the molten sheet product 4a to the above-mentioned movable cooling member 5, streamer corona discharge is properly applied from the above-mentioned tape electrode 10 to the molten sheet product 4a while effectively preventing the occurrence of contact of the molten sheet product 4a with the tape electrode 10 due to the vibration of the molten sheet product 4a. Since a high electric charge can be applied stably and continuously to the molten sheet product 4a, without adverse effects of breakage of the molten sheet product 4a to result in winding thereof around the movable cooling member 5 due to the above-mentioned spark discharge, damage of the tape electrode 10, formation of sheet surface faults and the like, the molten sheet product 4a is equally cooled by properly bringing the product into close contact with the movable cooling member 5 and a sheet having superior characteristics can be advantageously produced efficiently, even when the sheet take-up speed by the above-mentioned movable cooling member 5 is set high.

When the gap H between the above-mentioned tape electrode 10 and the molten sheet product 4a is less than a given level, the tip portion of the tape electrode 10 contacts the molten sheet product 4a to possibly damage the molten sheet product 4a. When the above-mentioned gap H becomes not less than a certain level, the application voltage for proper streamer corona discharge needs to be considerably high, which in turn inevitably facilitates occurrence of spark discharge. Therefore, the gap H between the above-mentioned tape electrode 10 and the molten sheet product 4a is set within the range of 0.5 mm - 10 mm.

The thermoplastic resin to be heated, kneaded and extruded by the above-mentioned extruder 3 is not particularly limited as long as its melt specific resistance value R is not less than $0.3 \times 10^8$ ($\Omega \cdot$cm), and the following resins can be mentioned. The above-mentioned melt specific resistance value R can be determined based on the formula R= (V·S/I·L) wherein V is a voltage value, S is an electrode area, I is an electric current value, L is a distance between electrodes, according to the electric current value, voltage value, electrode area and distance between electrodes, which are measured by vacuum drying a thermoplastic resin, placing the resin in a test tube having a 50 mm diameter, melting same under a nitrogen atmosphere, inserting a pair of copper electrodes in the above-mentioned thermoplastic resin under a nitrogen atmosphere at 285˚C, and applying voltage to the both electrodes from a DC high voltage generator.

As a thermoplastic resin having a high melt specific resistance value mentioned above, for example, polyethylene terephthalate, polybutylene terephthalate, polyethylene-2,6-naphthalate and polyester resin made of a copolymer comprising polymer components constituting these resins as main components can be preferably used.

When the above-mentioned copolymer is used, as its dicarboxylic acid component, aliphatic dicarboxylic acids such as adipic acid, sebacic acid, dodecanedioic acid and the like; aromatic dicarboxylic acids such as terephthalic acid, isophthalic acid, 2,6-naphthalenedicarboxylic acid, 1,2-bisphenoxyethane-p,p'-dicarboxylic acid and the like; and ester forming derivatives thereof (2,5-dimethylterephthalic acid etc.) and the like can be mentioned. Moreover, multifunctional carboxylic acids such as trimellitic acid, pyromellitic acid etc., and the like may be used.

As the glycol component of the above-mentioned copolymer, ethylene glycol, propylene glycol, diethylene glycol, 1,4-butanediol, 1,3-propanediol, neopentyl glycol, diethylene glycol, 1,4-cyclohexanedimethanol, trimethylolpropane, p-xylene glycol etc., polyethylene glycol having an average molecular weight of 150-2000, and the like are used.

The above-mentioned polyester resin composition may contain various known additives such as antistatic agent, UV absorber, stabilizer and the like.

Instead of the above-mentioned polyester resin having a high melt specific resistance value, a mixture of a material having a low melt specific resistance value and various additives (e.g., resin having high melt specific resistance value) having a melt specific resistance value adjusted to not less than $0.3 \times 10^8$ ($\Omega \cdot$cm) may be used.

A production method of a sheet is explained in the following using polyethylene terephthalate having a melt specific resistance value of not less than $0.3 \times 10^8$ ($\Omega \cdot$cm) as a thermoplastic resin to be heated and kneaded in the above-mentioned extruder 3, and a production apparatus having the above-mentioned constitution. Polyethylene terephthalate pellets containing particles for imparting slidability as necessary are sufficiently vacuum dried and fed to an extruder 3 for heat-kneading. Then, for example, a molten sheet product 4a having a temperature of about 280˚C is extruded from a spinneret 2 of the above-mentioned extruder 3 to be in contact with the surface of the movable cooling member 5.

A tape electrode 10 having a thickness of 5 $\mu$m-200 $\mu$m and plural protrusions 10a having a protrusion amount J of not less than 0.1 mm in the tip portion thereof is installed in the vicinity of the contact point between the molten sheet product 4a extruded on the movable cooling member 5 as mentioned above and the movable cooling member 5, and the tape electrode 10 is brought close to the above-mentioned contact point such that the interval H between the tape electrode 10 and the molten sheet product 4a is not more than 10 mm. The center 12 of the electrode is linearly installed along the width direction $\alpha$ of the molten sheet product 4a by being supported by the above-mentioned center support member 24, and the ear portion 13a of the electrode is installed while being shifted in the downstream side of the above-mentioned molten sheet product 4a in the transport direction $\beta$ by being supported by the ear portion supporting member comprising the above-mentioned ear portion adjust guide 26.

Where necessary, the above-mentioned ear portion adjust guide 26 is slidably displaced along the sheet transport direction $\beta$ to adjust the displacement amount X of the above-mentioned ear portion 13a of the electrode in the downstream side of the above-mentioned sheet transport direction $\beta$. Then, the tape electrode 10 is continuously or intermittently run along the width direction $\alpha$ of the above-mentioned molten sheet product 4a, during which a high direct voltage is applied between the tape electrode 10 and the movable cooling member 5, in the cooling step of the above-mentioned molten sheet product 4a. As a result, streamer corona discharge is applied to the molten sheet product 4a from the protrusions 10a of the tape electrode 10, whereby a large amount of electric charge is applied to the molten sheet product 4a, which in turn charges the molten sheet product 4a. Consequently, the molten sheet product 4a is brought into static close contact with the surface of the above-mentioned movable cooling member 5 and effectively cooled.

A sheet product 4b obtained by cooling upon close contact of the above-mentioned molten sheet product 4a to the movable cooling member 5 is fed to the first drawing part 7 and, after drawing in the longitudinal direction, the sheet product 4b is fed to the second drawing part 8 and drawn in the width direction of the sheet product 4b, whereby a sheet 4c having a given width and a given thickness is produced and wound around a take-up roll 9.

As mentioned above, an extruder 3 to extrude, in a sheet state, a thermoplastic resin having a melt specific resistance value of not less than $0.3 \times 10^8$ ($\Omega$·cm) in a molten state, a movable cooling member 5 to cool the molten sheet product 4a extruded from the extruder 3 and a tape electrode 10 having a thickness of 5 $\mu$m-200 $\mu$m and plural protrusions 10a having a protrusion amount J of not less than 0.1 mm in the tip portion thereof are installed along a contact point of the molten sheet product 4a with the movable cooling member 5, and streamer corona discharge is applied from the above-mentioned tape electrode 10 to the molten sheet product 4a while linearly installing the center 12 of the electrode along the width direction $\alpha$ of the molten sheet product 4a, and shifting the ear portion 13a of the electrode on the downstream side of the molten sheet product 4a in the transport direction, so as to bring the molten sheet product 4a into static close contact with the movable cooling member 5. Therefore, a sheet having a uniform thickness and free of surface defects can be produced efficiently at a high speed by equally cooling the molten sheet product 4a by properly bringing the product into static close contact with the movable cooling member 5, while setting a high sheet take-up speed by the above-mentioned movable cooling member 5.

Since control objects such as an extrusion amount of a thermoplastic resin material to be extruded from the above-mentioned extruder 3, an electric current to be flown from the above-mentioned tape electrode 10 to the molten sheet product 4a, the voltage to be applied to the tape electrode 10, the gap H between the tape electrode 10 and the molten sheet product 4a, installation position of the tape electrode 10 and the like are controlled according to the above-mentioned take-up speed of the molten sheet product 4a by the movable cooling member 5. Therefore, a sheet having a uniform thickness and free of surface defects can be produced efficiently at a high speed by equally cooling the molten sheet product 4a by properly bringing the product into static close contact with the movable cooling member 5, while setting a high sheet take-up speed by the above-mentioned movable cooling member 5.

When a thermoplastic resin having a melt specific resistance value of not less than $0.3 \times 10^8$ ($\Omega$·cm) is used as a starting material, producibility of the sheet is enhanced by taking up the molten sheet product 4a made of the thermoplastic resin material at a high speed by the movable cooling member 5, the conditions for properly applying the above-mentioned streamer corona discharge tend to remarkably change, since the contact point of the molten sheet product 4a with the movable cooling member 5 moves when the take-up speed of the above-mentioned molten sheet product 4a is gradually increased from a low speed range to a high speed after the start of the sheet production and the like. Therefore, when the setting of the conditions such as the installation position of tape electrode 10 relative to the above-mentioned contact point, energizing electric current on the above-mentioned molten sheet product 4a and the like is mistaken, spark discharge occurs to result in adverse effects such as breakage of the molten sheet product 4a, damage of the movable cooling member 5 and the like. However, by the controlling the control objects such as the installation position of the above-mentioned tape electrode 10, energizing electric current and the like to predetermined optimal values, according to the take-up speed of the molten sheet product 4a by the movable cooling member 5 as mentioned above, it is possible to properly bringing the molten sheet product 4a into close contact with the movable cooling member 5 without spark discharge by properly applying the above-mentioned streamer corona discharge.

To be specific, when the move distance of the above-mentioned movable cooling member 5 is set to a high speed of not less than 60 m/min, a large amount of air is sharply pushed out from the center of the movable cooling member 5 to the outward side upon contact of the molten sheet product 4a with the surface thereof. Due to the air pressure, right-left both side portions (ear portion) of the molten sheet product 4a rise and are curled, and particularly, remarkable curling occurs when the width of the molten sheet product 4a is not less than 500 mm. As a result, as shown in Fig. 2-1, the contact point Z1 of the ear portion of the molten sheet product 4a with the movable cooling member 5 is positioned on the downstream side in the sheet transport direction from a contact point Z2 of the center of the molten sheet product 4a with the movable cooling member 5, which in turn results in the different positions of the above-mentioned contact points Z1, Z2 in the upward-downward direction.

However, by linearly installing the center 12 of the electrode along the above-mentioned contact point Z2 and installing the ear portion 13a of the electrode in the downstream side in the sheet transport direction, the above-mentioned tape electrode 10 can accurately face the contact point of the movable cooling member 5 with the molten sheet product 4a over the full-length in the longitudinal direction. Therefore, streamer corona discharge, where a high electric current is flown from the above-mentioned tape electrode 10 to the molten sheet product 4a, can be applied properly to the whole area in the sheet width direction. Therefore, even when the take-up speed of the molten sheet product 4a having a width of not less than 500 mm is set high, a sheet having a uniform thickness and free of surface defects can be produced efficiently and properly at a high speed by equally cooling the molten sheet product 4a by properly bringing the sheet into close contact with the movable cooling member 5, while effectively suppressing the development of spark discharge.

Moreover, by forming a displacement amount adjust mechanism to slidably displace the above-mentioned center control guide 26 along the sheet transport direction $\beta$, the distance X between the above-mentioned center 12 of the electrode and the ear portion 13a of the electrode, i.e., the above-mentioned displacement amount of the ear portion 13a of the electrode in the downstream side in the sheet transport direction $\beta$, can be adjusted, or by the automatic adjustment corresponding to the above-mentioned take-up speed. Thus, even when the contact point Z1 of the ear portion of the molten sheet product 4a with the above-mentioned movable cooling member 5 changes in response to the changes in the take-up speed and thickness of the molten sheet product 4a to be taken up by the above-mentioned movable cooling member 5, the above-mentioned tape electrode 10 can be made to accurately face the contact point of the movable cooling member 5 with the molten sheet product 4a over its full-length in the longitudinal direction. Therefore, even when a thermoplastic resin having a melt specific resistance value of not less than $0.3 \times 10^8$ ($\Omega \cdot$cm) is used as a starting material to produce a sheet as mentioned above, streamer corona discharge can be properly applied without any means to excessively increase the above-mentioned application voltage and the like, and the development of spark discharge due to too high an electric current flown from the above-mentioned tape electrode 10 to the movable cooling member 5 can be effectively prevented.

Since a tape electrode 10 having a thickness of 5 $\mu$m-200 $\mu$m is installed along the vicinity of the contact point of the molten sheet product 4a with the above-mentioned movable cooling member 5, and plural protrusions 10a having a protrusion amount J of not less than 0.1 mm are formed in the tip portion of the tape electrode 10, low voltage streamer corona discharge can be properly applied to the molten sheet product 4a by concentrating the electric field to the protrusions 10a, and the above-mentioned molten sheet product 4a can be brought into static close contact with the movable cooling member 5. Consequently, the molten sheet product 4a can be effectively cooled without adverse effects of opaque sheet surface due to rough surface, formation of foam-like or line-like faults on the sheet surface due to partial capture of the air between the above-mentioned molten sheet product 4a and the movable cooling member 5 and the like.

Moreover, by installing the tape electrode 10 in the vicinity of the contact point of the molten sheet product 4a that does not vibrate easily due to a close contact of the molten sheet product 4a with the above-mentioned movable cooling member 5, streamer corona discharge is properly applied from the above-mentioned tape electrode 10 to the molten sheet product 4a while effectively preventing the occurrence of contact of the molten sheet product 4a with the tape electrode 10 due to the vibration of the molten sheet product 4a. Since a high electric charge can be applied stably and continuously to the molten sheet product 4a, without adverse effects of breakage of the molten sheet product 4a to result in winding thereof around the movable cooling member 5 due to the above-mentioned spark discharge, damage of the tape electrode 10 etc., formation of sheet surface faults and the like, the molten sheet product 4a is equally cooled by properly bringing the product into close contact with the movable cooling member 5 and a sheet having superior characteristics can be advantageously produced efficiently, even when the sheet take-up speed by the above-mentioned movable cooling member 5 is set high.

Due to the travel drive mechanism where a tape electrode 10 fed from a feed part 18 formed in one side end portion side of the movable cooling member 5 is wound in the take-up part 21 formed on the other side end portion side of the movable cooling member 5, while the displaced ear portion 13a of the above-mentioned tape electrode 10 in the downstream side of the molten sheet product 4a in the transport direction $\beta$, in a constitution where streamer corona discharge is applied from the tape electrode 10 to the molten sheet product 4a while running the tape electrode 10 along the width direction $\alpha$ of the molten sheet product 4a, contact failure due to attachment of impurities such as sublimation product and the like to the tape electrode and the like can be advantageously prevented while effectively preventing contact of the tape electrode 10 with the molten sheet product 4a, by always disposing a new tape electrode 10 along the width direction $\alpha$ of the molten sheet product 4a.

Moreover, when the gap H between the tape electrode 10 and the molten sheet product 4a is set within the range of 0.5 mm - 10 mm, as shown in the above-mentioned embodiment, streamer corona discharge where a high electric current is flown can be applied to the molten sheet product 4a by concentrating the electric field to the above-mentioned protrusion 10a, without setting the application voltage to an excessively high level, whereby a large amount of electric charge is applied to the molten sheet product 4a to bring the molten sheet product 4a into static close contact with the surface of the above-mentioned movable cooling member 5. Therefore, even when the sheet take-up speed by the above-mentioned movable cooling member 5 is set to a high speed of, for example, not less than 60 m/min, the molten sheet product 4a can be equally cooled by properly bringing the product into close contact with the movable cooling member 5, and producibility of the sheet can be enhanced without adverse effects of degraded transparency due to rough sheet surface and the like.

In the above-mentioned embodiment, installation interval W of adjacent protrusions 10a formed on the tape electrode 10 was set to less than 5 times the gap H between the above-mentioned tape electrode 10 and the molten sheet product 4a. Therefore, uniform streamer corona discharge can be applied from each protrusion 10a of the tape electrode 10 to the molten sheet product 4a while preventing the interval between the adjacent discharge parts from growing during streamer corona discharge. Accordingly, the entire molten sheet product 4a can be uniformly cooled advantageously while effectively preventing the phenomenon of alternate appearance of strong or weak contact with the above-mentioned movable cooling member 5, or development of line-like close contact failure.

In addition, in the above-mentioned embodiment, since the length of the center 12 of the electrode linearly set along the width direction $\alpha$ of the molten sheet product 4a can be changed in response to the width of the molten sheet product 4a by sliding both drive units 22 housing the feed part 18 and the take-up part 21 in the width direction $\alpha$ of the

molten sheet product 4a, even when the width changes due to the increase or decrease of the moving speed of the molten sheet product 4a and the like, both the center 12 of the electrode and an ear portion 13a of the electrode can be made to accurately face the contact point of the movable cooling member 5 with the molten sheet product 4a by changing the length of the center 12 of the electrode in response to the width change, streamer corona discharge can be properly applied to the entire area of the molten sheet product 4a.

In the above-mentioned embodiment, moreover, since an insulator 18 to prevent discharge from the ear portion 13a of the electrode to the movable cooling member 5 is installed between the ear portion 13a of the electrode and the movable cooling member 5, thereby to prevent direct discharge from the above-mentioned ear portion 13a of the electrode to the movable cooling member 5, shortage of the amount of electric charge to be applied to the ear portion of the molten sheet product 4a can be advantageously prevented effectively. Moreover, as mentioned above, since insulator 27 is installed between the above-mentioned ear portion of the electrode 13 and the movable cooling member 5 while displacing the ear portion 13a of the electrode in the downstream side of the molten sheet product 4a in the transport direction, the above-mentioned tape electrode 10 can be brought closer to the contact point of the movable cooling member 5 with the molten sheet product 4a while preventing contact of the tape electrode 10 with the insulator 27.

Instead of the above-mentioned embodiment where the energizing electric current from the tape electrode 10 to the molten sheet product 4a is controlled in response to the above-mentioned take-up speed of the molten sheet product 4a by the movable cooling member 5, the application voltage to the tape electrode 10 may be controlled. Alternatively, the application voltage to the tape electrode 10 may be controlled to be the optimal value corresponding to the take-up speed of the molten sheet product 4a until the take-up speed of the molten sheet product 4a reaches the previously determined stationary speed, and after reaching the above-mentioned stationary speed, energizing electric current to the molten sheet product 4a may be controlled.

In the above-mentioned embodiment, moreover, since the sheet width direction position Y of the tape electrode 10 relative to the standard coordinate point previously set, the sheet transport direction position L of the tape electrode 10 relative to the standard coordinate point previously set and the displacement amount X of the ear portion 13a of the electrode in the sheet transport direction,, are bilaterally symmetric, and the gap H between the tape electrode 10 and the molten sheet product 4a has a uniform size over the full-length in the length direction, the move distances in the right-left, front-back and upward-downward directions of the right and left drive units, or the drive units 22 on the feed part 18 side and the take-up side 21 are equally determined, as well as the front-back move distance of the right-left ear portion adjust guides 26 are equally determined. However, the above-mentioned move distances may differ from each other on the feed part 18 side and the take-up side 21. It is not always necessary to perform control of all the above-mentioned control objects, and one or more can be controlled.

When the tape electrode is run in the width direction $\alpha$ of a molten sheet product where the tension imparted to tape electrode 10 from a travel drive means having a feed part 18 and take-up part 21, as mentioned above, is set to fall within the range of 5%-95% of the cleavage strength, the above-mentioned tape electrode 10 can be made to run stably by applying an appropriate tension thereto while preventing cleavage of the tape electrode 10 due to an excessive tension applied to the tape electrode 10.

As mentioned above, in a sheet production method comprising an extrusion step to extrude, in a molten state, a thermoplastic resin having a melt specific resistance value of not less than $0.3 \times 10^8$ ($\Omega \cdot$cm) from an extruder 3 in a sheet state, a cooling step to cool the molten sheet product 4a extruded from the extruder 3 by bringing the product into close contact with a movable cooling member 5, and a draw step to draw the sheet product 4b after cooling, for bringing the molten sheet product 4a into static close contact with the above-mentioned movable cooling member 5 by performing streamer corona discharge on the molten sheet product 4a in the above-mentioned cooling step, from a tape electrode having a thickness of 5 $\mu$m-200 $\mu$m and multiple protrusions 10a having a protrusion amount J of not less than 0.1 mm, formed in the tip portion, which is installed along the contact point between the above-mentioned molten sheet product 4a and the movable cooling member 5, wherein the center 12 of the tape electrode disposed at the above-mentioned center of the molten sheet product 4a is stretched linearly along the width direction $\alpha$ of the molten sheet product 4a, the ear portion 13a of a tape electrode present at the both side portion sides of the above-mentioned molten sheet product 4a is supported with said ear portion being shifted to the downstream side in the molten sheet product-transport direction $\beta$ from the center 12 of the electrode and by winding a tape electrode 10 fed from a feed part 18 formed in one side end part of the movable cooling member 5, at a take-up part 21 formed in the other side end part of the movable cooling member 5, whereby the streamer corona discharge is applied in the above-mentioned cooling step while running the tape electrode 10 along the width direction $\alpha$ of the molten sheet product 4a. Therefore, streamer corona discharge, wherein a high electric current is flown to a molten sheet product 4a from each protrusion 10a formed in the above-mentioned tape electrode 10, can be properly performed over the entire area of the molten sheet product 4a by always providing a new tape electrode 10 along the width direction $\alpha$ of the molten sheet product 4a, while effectively preventing the occurrence of contact of the tape electrode 10 to the molten sheet product 4a. Therefore, a high electric charge can be stably and continuously applied to a molten sheet product 4a made of a thermoplastic resin having a melt specific resistance value of not less than $0.3 \times 10^8$ ($\Omega \cdot$cm), and even when the above-mentioned take-up speed of the molten sheet product 4a by the movable cooling member 5 is set high, a sheet having a uniform thickness and free of surface defects can be produced efficiently and properly at a high speed by equally cooling the molten sheet product 4a by properly bringing the sheet into close contact with the movable cooling member 5, while effectively suppressing the development of spark discharge.

While the above-mentioned embodiment explains a sheet production apparatus comprising draw a sheet product 4b after cooling, in two directions of the longitudinal direction and the width direction of the sheet in the first drawing part 7 and the second drawing part 8, only one of the above-mentioned directions may be drawing. In the case of single direction drawing, a sheet having a thickness of not less than 10 $\mu$m is preferably used in view of its dynamic rigidity, and in the case of two direction drawing, a sheet having a thickness of not less than 2 $\mu$m is preferably used. It is also possible to form a drawing part to further draw the sheet product 4b in the longitudinal direction and the width direction in the downstream side of the above-mentioned first and the second drawing parts 7, 8.

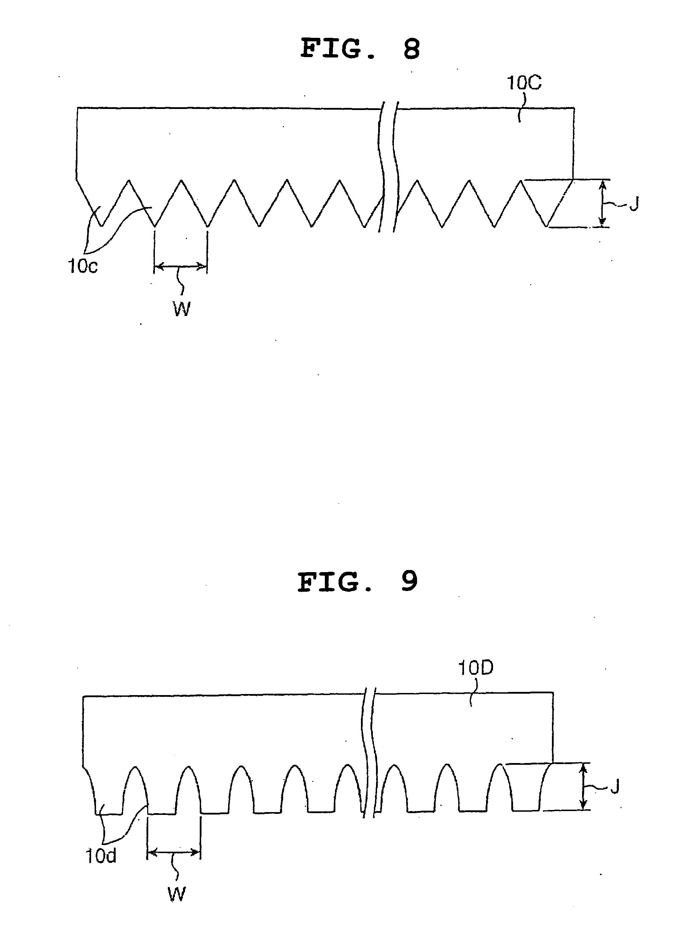

Instead of the type A tape electrode 10 of the above-mentioned embodiment comprising rectangular plural protrusions 10a in the tip portion thereof by forming rectangular notches at given intervals, as mentioned above, a type B tape electrode 10B as shown in Fig. 7, having narrowing trapezoid plural protrusions 10b in the tip portion thereof by forming tapered notches at given intervals, a type C tape electrode 10C as shown in Fig. 8, having narrowing triangular plural protrusions 10c in the tip portion thereof by forming V-shaped notches at given intervals, or a type D tape electrode 10D as shown in Fig. 9, having trapezoid-shaped plural protrusions 10d in the tip portion thereof by forming arch notches at given intervals, may be used.

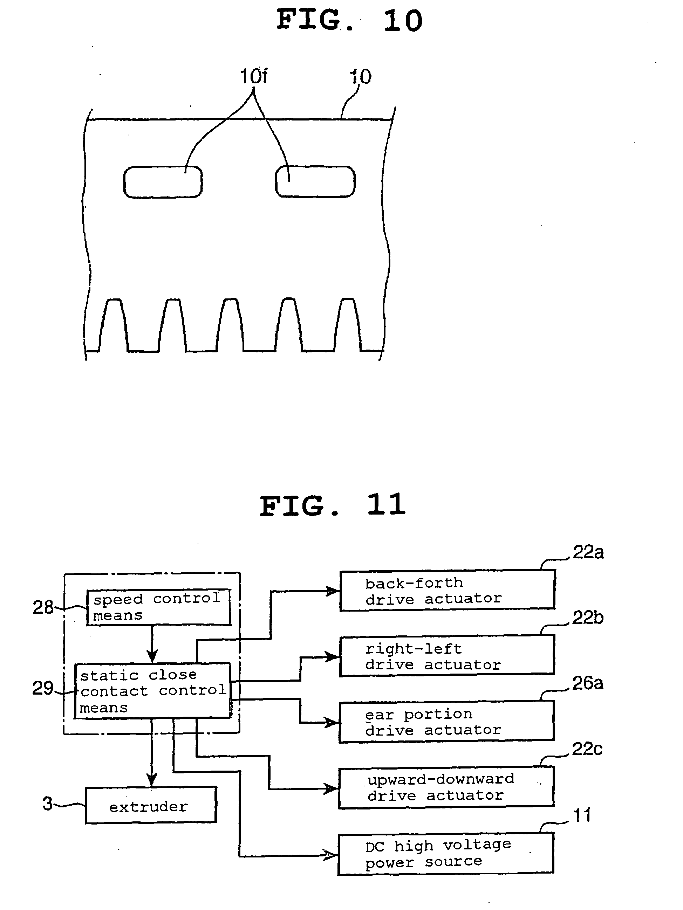

Furthermore, in the above-mentioned embodiment, the above-mentioned take-up drive mechanism consists of a feed part 18 disposed in one side end portion side of the movable cooling member 5, which comprises a brake motor 16 and a feeding roller 17, and a take-up part 21 disposed in the other side end portion side of the movable cooling member 5, which comprises a take-up motor 19 and a take-up roller 20. The concrete constitution of the take-up drive mechanism is not limited to the above-mentioned embodiment and can be modified variously. For example, as shown in Fig. 10, a positioning hole 10f is formed in the rear-end portion (upper side portion) of the tape electrode 10, a protrusion corresponding to the positioning hole 10f is formed on the surface of the feeding roller 17 and take-up roller 20, and the protrusion is engaged with the above-mentioned positioning hole 10f to run the positioned, above-mentioned tape electrode 10.

In addition, multiple guide rollers disposed between the above-mentioned center support member 22 and the outward portion support member 25 may be slidably displaced in the sheet transport direction $\beta$ to adjust the displacement amount of the ear portion 13a of the electrode to the downstream side of the above-mentioned sheet transport direction $\beta$, or a guide plate having a curved surface may be set between the above-mentioned center support member 22 and the outward portion support member 25, and the displacement amount of the ear portion 13a of the electrode to the downstream side of the above-mentioned sheet transport direction $\beta$ may be adjusted by changing the degree of curvature of the above-mentioned guide plate and the like.

## Examples

In Examples 1-1 to 1-3 of the present invention, resin pellets made from a polyethylene terephthalate resin having an intrinsic viscosity of 0.62 dl/g containing $CaCO_3$ and resin pellets free of $CaCO_3$ were mixed to give a starting material having a melt specific resistance value as a whole of $1.2 \times 10^8$ ($\Omega$.cm), which was vacuum dried (1.3 hPa) at a temperature of 135˚C for about 6 hr, supplied to an extruder 3, heat-kneaded at temperature of 280˚C, and extruded as a sheet product 4a in a molten state from a spinneret 2 of the extruder 3 having a width of 1486 mm on a movable cooling member 5.

A tape electrode made of stainless steel (austenite SUS316 manufactured by Toyo Seihaku Co., Ltd.) and having a width of 10 mm and a thickness of 50 $\mu$m was installed facing the surface of the movable cooling member 5 made of a metal roll having a surface temperature T of 30˚C, and a voltage of 7.8 kV - 10.2 kV was applied between the tape electrode and the above-mentioned movable cooling member 5 to flow an electric current of 45.5 mA - 61.8 mA. The sheet take-up speed by the above-mentioned movable cooling member 5 was set to 80 m/min, and a molten sheet product 4a having a width of 1300 mm and a thickness of 50 $\mu$m was formed. The close contact state of the molten sheet product 4a with the movable cooling member 5 was observed, whereby the data shown in the following Table 2 was obtained.

Table 2

| | | Examples | | | Comparative Examples | | | | | | |
|---|---|---|---|---|---|---|---|---|---|---|---|
| | | 1-1 | 1-2 | 1-3 | 2-1 | 2-2 | 2-3 | 3-1 | 3-2 | 4-1 | 4-2 |
| type of electrode | | type D | | | type D | | | type D | | | |
| protrusion amount J | (mm) | 2 | | | 2 | | | 2 | | | |
| interval W | (mm) | 1.2 | | | 1.2 | | | 1.2 | | | |
| interval H | (mm) | 5 | | | 5 | | | 5 | | | |
| take-up speed | (m/min) | 80 | 80 | 80 | 80 | 80 | 80 | 70 | 70 | 60 | 60 |
| discharge | | SC | | | SC | | | | | | |
| voltage | (kV) | 7.8 | 8.3 | 10.2 | 9.7 | 8.5 | 9.5 | 9.6 | 10.1 | 8.3 | 8.5 |
| electric current | (mA) | 45.5 | 49.4 | 61.8 | 59.8 | 50.7 | 58.1 | 50.6 | 54.5 | 35.4 | 38.1 |
| drive of electrode | (present/ absent) | pres. | pres. | pres. | abs. | abs. | abs. | pres. | pres. | pres. | pres. |
| side end position Y1 of electrode ear portion | (mm) | 15 | 15 | 15 | 15 | 15 | 25 | 15 | 25 | 15 | 15 |
| side end position Y2 of electrode center | (mm) | 60 | 61 | 63 | 60 | 61 | 63 | 60 | 60 | 59 | 59 |
| displacement amount X of electrode ear portion | (mm) | 4 | 6 | 8 | 4 | 6 | 8 | 0 | 0 | 3 | 3 |
| contact point position L2 of electrode center | (mm) | 45 | 45 | 46 | 45 | 45 | 45 | 45 | 45 | 45 | 45 |
| contact point position L1 of electrode ear portion | (mm) | 52 | 60 | 60 | 60 | 60 | 60 | 60 | 60 | 51 | 49 |
| tension during electrode running | (%) | 10 | 50 | 90 | 10 | 50 | 90 | 50 | 50 | 3 | 98 |
| stability of static close contact | continuous film forming | ○ | ○ | ○ | △ | △ | △ | × | × | × | x |

As a tape electrode in the above-mentioned Examples 1-1 to 1-3, a type D tape electrode 10D as shown in Fig. 9, having trapezoid-shaped plural protrusions 10d with a protrusion amount J of 2 mm in the tip portion thereof by forming tapered notches at given intervals was used, installation interval W of adjacent protrusions 10d was set to 1.2 mm and the gap H between the above-mentioned tape electrode 10 and the molten sheet product 4a was set to 5 mm.

The tension to be applied to the above-mentioned tape electrode 10B was set to 10%, 50%, 90% of strength at break, and streamer corona discharge was applied while running the tape electrode 10B in the width direction α of the molten sheet product 4a.

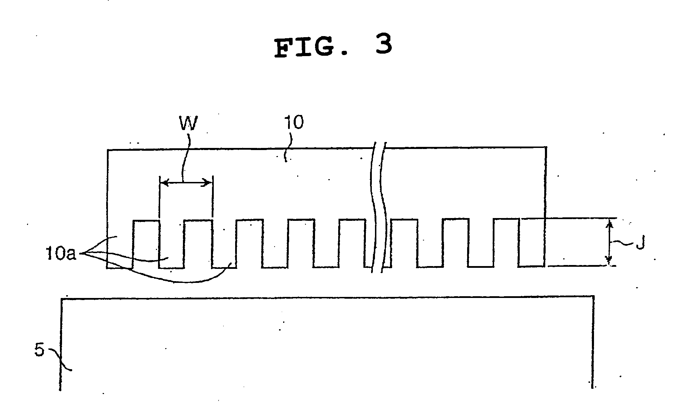

In the above-mentioned Examples 1-1 to 1-3, a side end position Y1 of the ear portion 13a of the electrode shown by the distance between the side end portion of the molten sheet product 4a and the side end portion of the tape electrode 10B was set to 15 mm, and a side end position Y2 of the center 12 of the electrode shown by the distance between the side end portion of the molten sheet product 4a and the center 12 of the electrode was set to fall within the range of 60 mm-63 mm. Furthermore, electrode displacement amount X shown by the distance between the center 12 of the electrode and right-left both ends 13 in the transport direction of the molten sheet product 4a was set to 4 mm in Example 1-1, 6 mm in Example 1-2 and 8 mm in Example 1-3. A contact point position L2 (see Fig. 3) of the center 12 of the electrode shown by the distance between the apex of the above-mentioned movable cooling member 5 and the contact point Z2 in the center of the molten sheet product 4a was about 45 mm, and the contact point position L1 of the ear portion 13a of the electrode shown by the distance between the apex of the movable cooling member 5 and the contact point Z1 in the right-left both side portion of the molten sheet product 4a was 52 mm - 60 mm.

Comparative Examples 2-1 and 2-2 had almost the same constitution as in the above-mentioned Examples 1-1 and 1-2 except that the tape electrode 10B was in a resting state without running in the width direction α of the molten sheet product 4a, and Comparative Examples 2-3 had almost the same constitution as in the above-mentioned Example 1-3 except that the tape electrode 10B was in a resting state without running in the width direction α of the molten sheet product 4a, and the side end position Y1 of the ear portion 13a of the electrode shown by the distance between the side end portion of the molten sheet product 4a and the side end portion of the tape electrode 10B was set to 25 mm.

Comparative Example 3-1 had almost the same constitution as in the above-mentioned Example 1-2 except that the above-mentioned electrode displacement amount X was set to 0 mm and the take-up speed of the molten sheet product 4a was set to 70 m/min, and Comparative Example 3-2 had almost the same constitution as in the above-mentioned Example 3-1 except that the above-mentioned electrode displacement amount X was set to 0 mm and the side end position Y1 of the ear portion 13a of the electrode shown by the distance between the side end portion of the molten sheet product 4a and the side end portion of the tape electrode 10B was set to 25 mm.

Furthermore, Comparative Example 4-1 had almost the same constitution as in the above-mentioned Example 1-1 except that the tension to be applied to the above-mentioned tape electrode 10B was set to 3% of the strength at break and the take-up speed of the molten sheet product 4a was set to 60 m/min, and Comparative Example 4-2 had almost the same constitution as in the above-mentioned Example 4-1 except that the tension to be applied to the above-mentioned tape electrode 10B was set to 98% of the strength at break.

From the above-mentioned data, it was confirmed that, in Examples 1-1 to 1-3 of the present invention wherein the center 12 of the above-mentioned electrode 10 was linearly set along the width direction α of the molten sheet product 4a, the both side portion 13 of the electrode 10 was disposed in the downstream side of the molten sheet product 4a in the transport direction by a given distance (4 mm - 8 mm), the tension to be applied to the above-mentioned tape electrode 10B was set to 10%, 50%, 90% of the strength at break, and streamer corona discharge was applied while running the tape electrode 10B in the width direction α of the molten sheet product 4a, the molten sheet product 4a was properly in close contact with the movable cooling member 5.

In Table 2, SC means that streamer corona discharge phenomenon was observed, and ○ means that stable streamer corona discharge was maintained for not less than 72 hr and abnormal close contact was not observed. In Table 2, ∆. means that stable streamer corona discharge was maintained for 20 - 72 hr and abnormal close contact was not observed, and × means that the sheet was wound around the movable cooling member 5 within several hours from the start of the static contact, which prevented proper sheet production.

In the above-mentioned Comparative Examples 2-1 - 2-3 wherein the tape electrode 10B was in a resting state without running in the width direction α of the molten sheet product 4a, stable streamer corona discharge was maintained within the range of 20 hr - 72 hr but take-up abnormality was observed thereafter. In the above-mentioned Comparative Examples 3-1 and 3-2 wherein the above-mentioned electrode displacement amount X was set to 0 mm and in Comparative Examples 4-1 and 4-2 wherein the tension to be applied to the above-mentioned tape electrode 10B was set to 3%, 98% of the strength at break, the sheet was wound around the movable cooling member 5 within several hours from the start of the static contact, which prevented proper sheet production.

In Examples 2-1 and 2-2 of the present invention, resin pellets made from a polyethylene terephthalate resin having an intrinsic viscosity of 0.62 dl/g containing $CaCO_3$ and resin pellets free of $CaCO_3$ were mixed to give a starting material having a melt specific resistance value as a whole of $1.2 \times 10^8$ (Ω.cm), which was vacuum dried (1.3 hPa) at a temperature of 135°C for about 6 hr, supplied to an extruder 3, heat-kneaded at temperature of 280°C, and extruded as a sheet product 4a in a molten state from a spinneret 2 of the extruder 3 having a width of 1486 mm on a movable cooling member 5.

A tape electrode 10D made of stainless steel (austenite SUS316 manufactured by Toyo Seihaku Co., Ltd.)

and having a width of 10 mm and a thickness of 50 $\mu$m was installed facing the surface of the movable cooling member 5, the surface temperature T was kept at 30˚C and the take-up speed of the above-mentioned molten sheet product 4a was set to 20 m/min. The tape electrode 10D was brought closer to the movable cooling member 5 such that the gap between the tape electrode 10D and the above-mentioned movable cooling member 5 was about 5 mm, and current regulation was performed to adjust the energizing electric current from the tape electrode 10D to the molten sheet product 4a to 4.5 kV, whereby streamer corona discharge was applied. As the above-mentioned tape electrode 10D, one having trapezoid-shaped protrusions 10d having a protrusion amount J of 2 mm in the tip portion and an installation interval W between adjacent protrusions 10d of 1.2 mm was used.

A speed control was performed wherein the take-up speed of the molten sheet product 4a was raised to 30 m/min from the above-mentioned state over 300 sec, as shown in the following Table 3, and, in accordance therewith, an automatic current regulation (ACR) was performed wherein the energizing electric current was automatically increased to 10 mA, and the take-up speed of the molten sheet product 4a was automatically increased to 40 m/min over 240 sec, and an automatic current regulation was performed wherein the energizing electric current was automatically increased to 13 mA. Furthermore, a speed control was performed wherein the take-up speed of the molten sheet product 4a was automatically increased sequentially from 40 m/min to 90 m/min over a given time, and an automatic current regulation was performed wherein the energizing electric current was automatically increased from 13 mA to 58 mA.

**Table 3**

| item | unit | 1 | 2 | 3 | 4 | 5 | 6 | 7 |
|---|---|---|---|---|---|---|---|---|
| take-up speed | (m/min) | 30 | 40 | 50 | 60 | 70 | 80 | 90 |
| electric current setting | (mA) | 10 | 13 | 23 | 34 | 42 | 50 | 58 |
| variation time | (sec) | 300 | 240 | 240 | 180 | 90 | 90 | 60 |

In Example 2-1, the automatic current regulation (ACR) was performed even after a shift to stationary operation state, and in Example 2-2, when foam-like defects and the like formed in the sheet after a shift to stationary operation state disappeared, the control was switched to an automatic voltage regulation (AVR) wherein the application voltage was maintained. The operation was repeated 100 times from the start of the production of the above-mentioned sheet up to the stationary production state, during which the incidence of troubles was counted, and the time necessary to shift to the stationary production state from the sheet production start was measured, whereby the data shown in the following Table 4 was obtained. In Table 4, SC means presence of streamer corona discharge phenomenon. In addition, O means the absence of trouble during 100 repeats of the above-mentioned operation, $\triangle$ means once or twice of troubles during 100 repeats of the above-mentioned operation, and $\times$ means not less than 5 times of troubles during 100 repeats of the above-mentioned operation.

**Table 4**

| | | Examples | | Comparative Examples | | | | |
|---|---|---|---|---|---|---|---|---|
| | | 2-1 | 2-2 | 5-1 | 5-2 | 6-1 | 6-2 | 6-3 |
| type of electrode | | type D | | type D | | | | |
| protrusion amount J | (mm) | 2 | | 2 | | | | |
| interval W | (mm) | 1.2 | | 1.2 | | | | |
| interval H | (mm) | 5 | | 5 | | | | |
| take-up speed | (m/min) | 90 | | 90 | | | | |
| discharge | | SC | | SC | | | | |
| power source control method | low speed | ACR | AVR | ACR | | AVR | | |
| | stationary | ACR | ACR | ACR | | ACR | | |
| whole step control | present/absent | pres. | pres. | abs. | abs. | abs. | abs. | abs. |
| trouble development state | | ○ | ○ | $\times$ | $\times$ | $\times$ | $\triangle$ | $\triangle$ |

(continued)

| type of electrode | | type D | | type D | | | | |
|---|---|---|---|---|---|---|---|---|
| goal achieve time from low speed to high speed | (min) | 20 | 20 | 20 | 30 | 20 | 30 | 40 |

Comparative Example 5-1 had almost the same constitution as in the above-mentioned Example 2-1 except that the take-up speed of the molten sheet product 4a by the movable cooling member 5 and the energizing electric current to the molten sheet product 4a during low speed take-up were manually changed, and Comparative Example 5-2 had almost the same constitution as in the above-mentioned Comparative Example 5-1 except that the time up to the shift to stationary production state from the sheet production start time was set to 30 min.

Comparative Examples 6-1 to 6-3 had almost the same constitution as in the above-mentioned Example 2-2 except that the take-up speed of the molten sheet product 4a by the movable cooling member 5 and the application voltage to the tape electrode 10 during low speed take-up were manually changed, and the automatic current regulation (ACR) after the shift to the stationary operation state was manually performed, in Comparative Example 6-1, the time up to the shift to the stationary production state from the sheet production start time was set to 20 min, in Comparative Example 6-2, the time up to the shift to stationary production state from the sheet production start time was set to 30 min, and in Comparative Example 6-3, the time up to the shift to stationary production state from the sheet production start time was set to 40 min.

From the above-mentioned data, it was confirmed that, in Examples 2-1 and 2-2 where the control target of an energizing electric current from the tape electrode 10D to the molten sheet product 4a was automatically controlled, no trouble occurred during 100 repeats of the above-mentioned operation, and the time up to the shift to stationary production state from the sheet production start time could be suppressed to about 20 min.

In contrast, in Comparative Examples 5-1 and 5-2 where the control target of an energizing electric current from the tape electrode 10D to the molten sheet product 4a was manually controlled, not less than 5 times of trouble occurred during 100 repeats of the above-mentioned operation, which prevented proper production of the sheets.

In Comparative Example 6-1 where the control targets of an application voltage to the tape electrode 10D and the like were manually controlled and the time up to the shift to stationary production state from the sheet production start time was set to 20 min, not less than 5 times of trouble occurred during 100 repeats of the above-mentioned operation, and in Comparative Examples 6-2 and 6-3 where the control targets of an application voltage to the tape electrode 10D and the like were manually controlled, the time up to the shift to stationary production state from the sheet production start time was set to 30 min, 40 min, once or twice of trouble occurred during 100 repeats of the above-mentioned operation.

In Examples 3-1 and 3-2 of the present invention, resin pellets made from a polyethylene terephthalate resin having an intrinsic viscosity of 0.62 dl/g containing $CaCO_3$ and resin pellets free of $CaCO_3$ were mixed to give a starting material having a melt specific resistance value as a whole of $1.2 \times 10^8$ ($\Omega$·cm), which was vacuum dried (1.3 hPa) at a temperature of 135°C for about 6 hr, supplied to an extruder 3, heat-kneaded at temperature of 280°C, and extruded as a sheet product 4a in a molten state from a spinneret 2 of the extruder 3 having a width of 500 mm on a movable cooling member 5 consisting of a metal roll.

A tape electrode 10 made of stainless steel (austenite SUS316 manufactured by Toyo Seihaku Co., Ltd.) and having a width of 10 mm and a thickness of 50 $\mu$m was installed facing the surface of a movable cooling member 5 having a surface temperature T of 30°C, and a take-up speed of the above-mentioned molten sheet product 4a by the above-mentioned movable cooling member 5 was set to a low speed of 5 m/min. The tape electrode 10 was brought closer to the movable cooling member 5 such that the gap between the tape electrode 10 and the above-mentioned movable cooling member 5 was about 5 mm, and voltage regulation was performed to gradually increase the application voltage to the tape electrode 10 to the target value of 5 kV, whereby streamer corona discharge was applied.

As the above-mentioned tape electrode 10, in Example 3-1, a type A tape electrode as shown in Fig. 3, having rectangular protrusions 10a with a protrusion amount J of 2 mm in the tip portion thereof by forming rectangular notches at given intervals, and an installation interval W of adjacent protrusions 10a of 1.2 mm was used, and in Example 3-2, a type B tape electrode as shown in Fig. 7, having a similar electrode size as in the above-mentioned Example 3-1, and plural narrowing trapezoid protrusions 10b in the tip portion thereof by forming tapered notches at given intervals, was used.

The installation position of the tape electrode 10 was adjusted such that the above-mentioned tape electrode 10 was brought closer to the contact point Z of the molten sheet product 4a with the movable cooling member 5, while gradually increasing an extrusion amount of the molten sheet product 4a by the above-mentioned extruder 3 from the above-mentioned state, and gradually increasing the take-up speed of the molten sheet product 4a by the movable cooling member 5 up to the stationary production speed set to 90 m/min. A voltage regulation was performed wherein the application voltage of the tape electrode 10 increased while adjusting the gap H between the tape electrode 10 and the movable cooling member 5 to about 5 mm, and when foam-like defects and the like formed in the sheet disappeared, the control was switched to a current regulation wherein the energizing electric current was maintained.

In this way, the sheet take-up speed by the above-mentioned movable cooling member 5 was set to 90 m/min, the molten sheet product 4a having a width of 390 mm and a thickness of 140 $\mu$m was formed, voltage adjustment frequency during low speed take-up was measured, and a sheet thickness variation rate was examined, whereby the data shown in the following Table 5 was obtained.

CR ACR AVR ACR ACR AVR AVR ary

## Table 5

| | | Examples | | Comparative Examples | | | | |
|---|---|---|---|---|---|---|---|---|
| | | 3-1 | 3-2 | 7-1 | 8-1 | 8-2 | 9-1 | 9-2 |
| type of electrode | | type A | type B | wire electrode | type A | type B | type A | type B |
| protrusion amount H | (mm) | 2 | 2 | | 2 | 2 | 2 | 2 |
| interval W | (mm) | 1.2 | 1.2 | | 1.2 | 1.2 | 1.2 | 1.2 |
| interval N | (mm) | 5 | 5 | 5 | 5 | 5 | 5 | 5 |
| moving speed | (m/min) | 90 | 90 | 30 | 90 | 90 | 90 | 90 |
| discharge | | SC | | not observed | SC | | | |
| control method | low speed | AVR | AVR | AVR | ACR | ACR | AVR | AVR |
| | station-ary | ACR | ACR | AVR | ACR | ACR | AVR | AVR |
| voltage during close contact | (kV) | 8.5 | 8.9 | 9.5 | 9.2 | 8.6 | 8.8 | 8.5 |
| electric current during close contact | (mA) | 13.3 | 14.3 | 0.2 | 14.6 | 13.8 | 14.1 | 13.6 |
| power source operation frequency during low speed | (times) | 0 | 1 | 0 | 13 | 11 | 1 | 0 |
| thickness variation rate | (%) | 5.2 | 4.9 | 5.1 | 4.7 | 5.1 | 7.7 | 8.1 |

In the above-mentioned Table 5, SC means that streamer corona discharge phenomenon was observed, AVR means use of automatic voltage regulation, and ACR means use of automatic current regulation. The variation rate of the above-mentioned thickness was determined by measuring the maximum thickness, the minimum thickness and an average thickness in the length direction per sheet length 20 m using a continuous contact type thickness meter manufactured by Anritsu Corporation, and based on the following formula.

$$\text{Thickness variation rate (\%)} = 100 \times \text{(maximum thickness-}$$

$$\text{minimum thickness)/average thickness}$$

In Comparative Example 7-1, an electrode made of a tungsten wire having a diameter of 30 $\mu$m was set in the vicinity of the contact point Z of the molten sheet product 4a with the surface of the movable cooling member 5 instead of the above-mentioned tape electrode 10, and the gap H between the electrode and the molten sheet product 4a was set to 5 mm. The moving speed of the above-mentioned movable cooling member 5 was set to 30 m/min, a positive voltage was applied to the above-mentioned electrode, the voltage and the electric current were gradually raised from low values, the state of discharge was observed and the sheet thickness variation rate was examined.

Comparative Examples 8-1 and 8-2 had almost the same constitution as in the above-mentioned Examples 3-1 and 3-2 except that automatic current regulation (ACR) was performed wherein all the electric current energized from the tape electrode 10 to the molten sheet product 4a was controlled from the start of the sheet production. Comparative Examples 9-1 and 9-2 had almost the same constitution as in the above-mentioned Examples 3-1 and 3-2 except that an automatic voltage regulation (AVR) was performed wherein all the voltage to be applied to the tape electrode 10 was controlled from the start of the sheet production.

In Example 3-1 of the present invention wherein the above-mentioned type A electrode was used, when a positive voltage with application voltage of 8.5 kV was applied to an electrode to flow an 13.3 mA electric current, proper streamer corona discharge was applied to achieve a static contact condition where foam-like defects and the like to be formed in the sheet disappeared, the voltage adjustment frequency during low speed take-up was 0 and the above-mentioned thickness variation rate was 5.2%. In Example 3-2 wherein a type B electrode was used, when a positive voltage with application voltage of 8.9 kV was applied to an electrode to flow an 14.3 mA electric current, proper streamer corona discharge was applied to achieve a static contact condition where foam-like defects and the like to be formed in the sheet disappeared. While one time voltage adjustment was necessary during low speed take-up, the above-mentioned thickness variation rate was 4.9%.

In contrast, in Comparative Example 7-1 where an tungsten wire electrode was used, streamer corona discharge was not observed and, to properly bring the molten sheet product 4a into static close contact with the movable cooling member 5, the moving speed of the movable cooling member 5 needs to be set to an extremely low value (30 m/min), the electric current range where the molten sheet product 4a can stably and statically contact the movable cooling member 5 tends to be narrow as the above-mentioned moving speed increases, which confirmed poor producibility.

In Comparative Examples 8-1 and 8-2 where automatic current regulation (ACR) was performed wherein all the electric current to be flown from the start of the sheet production to tape electrode 10 is controlled, the above-mentioned thickness variation rate was 4.9% which was relatively fine, but 13 times and 11 times of voltage adjustments were necessary for each during low speed take-up, which confirmed complicated adjustment operation.

In Comparative Examples 9-1 and 9-2 wherein an automatic voltage regulation (AVR) was performed wherein all the applied voltage to the tape electrode 10 was controlled from the start of the sheet production, voltage adjustment during low speed take-up was almost unnecessary, but the above-mentioned thickness variation rate was 7.7%, 8.1%, respectively, and the variation rate was confirmed to be greater than that in Examples 3-1 and 3-2 of the present invention.

In Examples 4a to 4c of the present invention, resin pellets made from a polyethylene terephthalate resin having an intrinsic viscosity of 0.62 dl/g containing $CaCO_3$ and resin pellets free of $CaCO_3$ were mixed to give a starting material having a melt specific resistance value as a whole of $1.2 \times 10^8$ ($\Omega$.cm), which was vacuum dried (1.3 hPa) at a temperature of 135˚C for about 6 hr, supplied to an extruder 3, heat-kneaded at temperature of 280˚C, and extruded as a sheet product 4a in a molten state from a spinneret 2 of the extruder 3 having a width of 450 mm on a movable cooling member 5.

A tape electrode 10 made of stainless steel (austenite SUS316 manufactured by Toyo Seihaku Co., Ltd.) and having a width of 10 mm and a thickness of 50 $\mu$m was installed facing the surface of the movable cooling member 5 made of a metal roll having a surface temperature T of 20˚C, and a voltage of 6.9 kV - 10.1 kV was applied between the tape electrode 10 and the above-mentioned movable cooling member 5 to flow an electric current of 7.8 mA - 10.4 mA. The moving speed of the above-mentioned movable cooling member 5 was set to 80 m/min, 90 m/min, 100 m/min, and molten sheet products 4a having a width of 260 mm and a thickness of 140 $\mu$m were formed. The close contact state of the molten sheet product 4a with the movable cooling member 5 was observed, whereby the data shown in the following Table 6 was obtained.

**Table 6**

| | | Examples | | | Comparative Examples | | | | | |
|---|---|---|---|---|---|---|---|---|---|---|
| | | 4a | 4b | 4c | 10a | 10b | 10c | 11a | 11b | 11c |
| electrode | | electrode of the present invention | | | wire electrode | | | tape electrode | | |
| type of electrode | | type A | | | electrode diameter: 30 μm | | | electrode thickness: 20 μm | | |
| protrusion amount H | (mm) | 2 | 2 | 2 | | | | | | |
| interval W | (mm) | 6 | 6 | 6 | | | | | | |
| interval N | (mm) | 5 | 5 | 5 | 5 | 5 | 5 | 5 | 5 | 5 |
| moving speed | (m/min) | 80 | 90 | 100 | 30 | 32 | 35 | 30 | 35 | 39 |
| discharge | | SC* | | | not observed | not observed | spark | not observed | not observed | spark |
| voltage | (kV) | 6.9 | 9.7 | 10.1 | 9.5 | 11.3 | 12.3 | 8.8 | 9.3 | 12.2 |
| electric current | (mA) | 7.8 | 9.3 | 10.4 | 0.2 | 0.3 | − | 0.4 | 0.6 | − |
| cooling state of sheet | visual evaluation | O | O | O | O | Δ | × | O | Δ | × |

*: SC (streamer corona discharge)

EP 1 704 985 A1

As the tape electrode 10, in Example 4a-4c, a type A tape electrode as shown in Fig. 3, having plural rectangular protrusions 10 with a protrusion amount J of 2 mm and a width of 3 mm in the tip portion thereof by forming rectangular notches at given intervals was used. The installation interval W between adjacent protrusions 10 was set to 6 mm, and the gap N between the above-mentioned tape electrode 10 and the molten sheet product 4a was set to 5 mm.

In Comparative Examples 10a-10c, a tungsten wire electrode having a diameter of 30 $\mu$m was installed, instead of the above-mentioned tape electrode 10, in the vicinity of the contact point Z of the molten sheet product 4a with a surface of the movable cooling member 5, the gap N between the electrode and the molten sheet product 4a was set to 5 mm, the moving speed of the above-mentioned movable cooling member 5 was set to 30 m/min - 35 m/min, and the voltage value and electric current value to be applied between the above-mentioned electrode and the movable cooling member 5 were adjusted to various values. Comparative Examples 11a-11c had almost the same constitution as in the above-mentioned Comparative Examples 10a-10c except that the electrode thickness was set to 20 $\mu$m, and a tape electrode free of protrusions 10a in the tip portion was used.

From the above-mentioned data, in any of Example 4a wherein the moving speed of the movable cooling member 5 was set to 80 m/min, Example 4b wherein the moving speed was set to 90 m/min and Example 1c wherein the moving speed was set to 100 m/min, of the present invention, the development of streamer corona discharge at 3 mm intervals from the right-left both corners of the above-mentioned protrusions 10a having a width of 3 mm formed on the tape electrode 10 was observed, and proper close contact of the molten sheet product 4a with the movable cooling member 5 was confirmed. In Table 6, SC means that streamer corona discharge phenomenon was observed, and O means that the entire molten sheet product 4a was completely cooled with no defects such as pinning bubble foam on the sheet surface and the like. In Table 6, moreover, $\Delta$ means that thin pinning bubble defects are partially observed on the sheet surface, and $\times$ means that pinning bubble defects are observed in the entire sheet or line defects are observed.

In contrast, in the above-mentioned Comparative Examples 10a-10c where a tungsten wire electrode was used and the above-mentioned Comparative Example 11a-11c where a tape electrode free of protrusions was used, when the moving speed of the movable cooling member 5 was faster than 30 m/min, occurrence of air foams and line spots was inevitable between the movable cooling member 5 and the molten sheet product 4a. When the above-mentioned application voltage was increased to prevent such occurrence, sheet could not be produced properly due to spark discharge, wire cleavage, cooling spot in the sheet, a molten sheet product wound around the movable cooling member 5 and the like.

The close contact with the movable cooling member 5 was observed for Example 5a of the present invention having almost the same constitution as in the above-mentioned Examples 4b, Example 5b of the present invention having almost the same constitution as in the above-mentioned Examples 4b except that a type B tape electrode 10B having protrusions 10b having a trapezoid shape as shown in Fig. 4 was used, and 9.8 kV voltage was applied between the tape electrode 10B and the above-mentioned movable cooling member 5 to flow 9.1 mA electric current, Example 5c of the present invention having almost the same constitution as in the above-mentioned Examples 4b except that a type C tape electrode 10C having protrusions 10c having a triangular shape as shown in Fig. 8 was used and 9.6 kV voltage was applied between the tape electrode 10 and the above-mentioned movable cooling member 5 to flow 9.4 mA electric current and, as a result, the data as shown in the following Table 7 was obtained. From the data, it was confirmed that, in Examples 5a-5c of the present invention, streamer corona discharge was developed at given intervals from the electrode to the molten sheet product 4a, and the molten sheet product 4a was in proper close contact with the movable cooling member 5.

Table 7

| | | Examples | | | Comparative Examples | | | | | |
|---|---|---|---|---|---|---|---|---|---|---|
| | | 5a | 5b | 5c | 12a | 12b | 13a | 13b | 14a | 14b |
| electrode | | electrode of the present invention | | | electrode shape unsuitable for the present invention | | | | | |
| type of electrode | | type A | type B | type C | type A | type A | type B | type B | type C | type C |
| protrusion amount H | (mm) | 2 | 2 | 2 | 0.05 | 2 | 0.05 | 2 | 0.05 | 2 |
| interval W | (mm) | 6 | 6 | 2 | 6 | 30 | 6 | 30 | 6 | 30 |
| interval N | (mm) | 5 | 5 | 5 | 5 | 5 | 5 | 5 | 5 | 5 |

(continued)

| electrode | | electrode of the present invention | | | electrode shape unsuitable for the present invention | | | | | |
|---|---|---|---|---|---|---|---|---|---|---|
| type of electrode | | type A | type B | type C | type A | type A | type B | type B | type C | type C |
| moving speed | (m/min) | 90 | 90 | 90 | 70 | 70 | 70 | 70 | 70 | 70 |
| discharge | | SC* | | | | | | | | |
| voltage | (kV) | 9.7 | 9.8 | 9.6 | 9.7 | 10 | 9.8 | 10.5 | 9.8 | 10.2 |
| electric current | (mA) | 9.3 | 9.1 | 9.4 | 5.5 | 4.1 | 5.3 | 4.2 | 5.6 | 4.4 |
| cooling state of sheet | visual evaluation | ○ | ○ | ○ | △ | × | △ | × | △ | × |

In contrast, in Comparative Example 12a having almost the same constitution as in the above-mentioned Example 5a of the present invention except that the protrusion amount J of the protrusions 10a formed on the type A electrode was set to 0.05 mm, and Comparative Example 12b having almost the same constitution as in the above-mentioned Example 5a of the present invention except that installation interval W of the adjacent protrusions 10a was set to 30 mm, when the moving speed of the movable cooling member 5 was set to 70 m/min, proper close contact of the molten sheet product 4a with the movable cooling member 5 could not be achieved, thin pinning bubble defects were partially observed on the sheet surface in Comparative Example 12a, and pinning bubble defects were observed in the entire sheet or line defects were observed in Comparative Example 12b.

In addition, in Comparative Example 13a having almost the same constitution as in the above-mentioned Example 5b of the present invention except that the protrusion amount J of the protrusions 10b formed on the type B tape electrode 10B was set to 0.05 mm, and 9.8 kV voltage was applied between the tape electrode 10B and the above-mentioned movable cooling member 5 to flow 5.3 mA electric current, and in Comparative Example 13b having almost the same constitution as in the above-mentioned Example 5b of the present invention except that the installation interval W of the adjacent protrusions 10b was set to 30 mm, and 10.5 kV voltage was applied between the tape electrode 10B and the above-mentioned movable cooling member 5 to flow 4.2 mA electric current, when the moving speed of the movable cooling member 5 was set to 70 m/min, proper close contact of the molten sheet product 4a with the movable cooling member 5 could not be achieved, thin pinning bubble defects were partially observed on the sheet surface in Comparative Example 13a, and pinning bubble defects were observed in the entire sheet or line defects were observed in Comparative Example 13b.

Furthermore, in Comparative Example 14a having almost the same constitution as in the above-mentioned Example 25c of the present invention except that the protrusion amount J of the protrusions 10c formed on the type C tape electrode 10C as shown in Fig. 8 was set to 0.05 mm, and 9.8 kV voltage was applied between the tape electrode 10C and the above-mentioned movable cooling member 5 to flow 5.6 mA electric current, and in Comparative Example 14b having almost the same constitution as in the above-mentioned Example 5c of the present invention except that the installation interval W of the adjacent protrusions 10c was set to 30 mm, and 10.2 kV voltage was applied between the electrode and the above-mentioned movable cooling member 5 to flow 4.4 mA electric current, when the moving speed of the movable cooling member 5 was set to 70 m/min, proper close contact of the molten sheet product 4a with the movable cooling member 5 could not be achieved, thin pinning bubble defects were partially observed on the sheet surface in Comparative Example 14a, and pinning bubble defects were observed in the entire sheet or line defects were observed in Comparative Example 14b.

**INDUSTRIAL APPLICABILITY**

According to the sheet production method of the present invention, a molten sheet product made from a thermoplastic resin having a high melt specific resistance value can be properly brought into static contact with a movable cooling member, and even when the moving speed of the movable cooling member is raised, the above-mentioned molten sheet product can be cooled properly to enhance producibility of the sheet, which have been conventionally difficult to achieve, and the invention greatly contributes to the industry.

**Claims**

1.  A sheet production apparatus comprising an extruder to extrude, in a sheet state, a thermoplastic resin having a melt specific resistance value of not less than $0.3 \times 10^8$ ($\Omega \cdot$cm) in a molten state, and a movable cooling member for cooling the molten sheet product extruded from the extruder, which has a constitution where a tape electrode having a thickness of 5 $\mu$m-200 $\mu$m and multiple protrusions having a protrusion amount of not less than 0.1 mm, which are formed in the tip portion, is installed along the contact point between the molten sheet product and the movable cooling member, and the molten sheet product is brought into static close contact with the movable cooling member by streamer corona discharge from the above-mentioned tape electrode to the molten sheet product, comprising a center support member to support the center of the tape electrode disposed at the above-mentioned center of the molten sheet product, said center of the tape electrode being stretched linearly along the width direction of the molten sheet product; an ear portion supporting member to support the ear portion of a tape electrode present at the both side portion sides of the above-mentioned molten sheet product, said ear portion being shifted to the downstream side in the molten sheet product transport direction from the center of the electrode; a pair of displacement amount adjusting mechanism to adjust the displacement amount of the ear portion of the electrode to the above-mentioned downstream side in the sheet transport direction; and a travel drive mechanism to run the tape electrode along the width direction of a molten sheet product by winding a tape electrode fed from a feed part formed in one side end part of the movable cooling member, at a take-up part formed in the other side end part of the movable cooling member.

2.  The sheet production apparatus of claim 1, wherein the gap between the tape electrode and the molten sheet product is set within the range of 0.5 mm - 10 mm.

3.  The sheet production apparatus of claim 1 or 2, wherein the interval between adjacent protrusions is set to less than 5 times the above-mentioned gap between the tape electrode and the molten sheet product.

4.  The sheet production apparatus described in any one of claims 1 to 3, wherein the length of the center of the electrode disposed linearly along the width direction of the molten sheet product changes in response to the width of the molten sheet product.

5.  The sheet production apparatus described in any one of claims 1 to 4, wherein an insulator to prevent discharge from the ear portion of the tape electrode to the movable cooling member is installed between the ear portion of the electrode and the movable cooling member.

6.  The sheet production apparatus described in any one of claims 1 to 5, wherein the tape electrode is run along the width direction of the molten sheet product with a tension applied to the tape electrode by the travel drive means within the range of 5%-95% of the cleavage strength.

7.  A production method of a sheet, comprising an extrusion step to extrude, in a sheet state, a thermoplastic resin having a melt specific resistance value of not less than $0.3 \times 10^8$ ($\Omega \cdot$cm) in a molten state from an extruder, a cooling step to cool the molten sheet product extruded from the extruder by bringing the product into close contact with a movable cooling member, and a draw step to draw the sheet product after cooling, for bringing the molten sheet product into static close contact with the movable cooling member by performing streamer corona discharge on the molten sheet product in the above-mentioned cooling step, from a tape electrode having a thickness of 5 $\mu$m-200 $\mu$m and multiple protrusions having a protrusion amount of not less than 0.1 mm, formed in the tip portion, which is installed along the contact point between the above-mentioned molten sheet product and the movable cooling member, wherein the center of the tape electrode disposed at the above-mentioned center of the molten sheet product is stretched linearly along the width direction of the molten sheet product, the ear portion of a tape electrode present at the both side portion sides of the above-mentioned molten sheet product is supported with said ear portion being shifted to the downstream side in the molten sheet product-transport direction from the center of the electrode and the above-mentioned streamer corona discharge is applied while running the tape electrode along the width direction of a molten sheet product by winding a tape electrode fed from a feed part formed in one side end part of the movable cooling member, at a take-up part formed in the other side end part of the movable cooling member.

8.  A sheet production apparatus comprising an extruder to extrude, in a sheet state, a thermoplastic resin having a melt specific resistance value of not less than $0.3 \times 10^8$ ($\Omega \cdot$cm) in a molten state, a movable cooling member for cooling the molten sheet product extruded from the extruder, and an electrode disposed along the contact point between the molten sheet product and the movable cooling member, which has a constitution where the molten sheet product is brought into static close contact with the movable cooling member by streamer corona discharge from the above-mentioned tape electrode to the molten sheet product, comprising a static contact control means to control at least one of the control objects of an extrusion amount of the thermoplastic resin material extruded from the above-mentioned extruder, the electric current flown from the above-mentioned electrode to the molten sheet product, the voltage to be applied to the electrode, the gap between the electrode and the movable cooling member or an installation position of the electrode and the like, in response to the take-up speed of the molten sheet product by the above-mentioned movable cooling member.

9.  The sheet production apparatus of claim 8, which comprises a control using a static contact control means, by preparing a corresponding Table of a take-up speed of the molten sheet product and the optimal value of the control object, based on the experiments previously performed, and reading the optimal value of the control object corresponding to the take-up speed of the molten sheet product at the present time point from the corresponding Table.

10.  A sheet production apparatus comprising an extruder to extrude, in a sheet state, a thermoplastic resin having a melt specific resistance value of not less than $0.3 \times 10^8$ ($\Omega\cdot$cm) in a molten state, a movable cooling member for cooling the molten sheet product extruded from the extruder, and an electrode disposed along the contact point between the molten sheet product and the movable cooling member, which has a constitution where the molten sheet product is brought into static close contact with the movable cooling member by streamer corona discharge from the above-mentioned tape electrode to the molten sheet product, comprising a voltage regulation means to control a voltage to be applied to the electrode, a current regulation means to control an energizing electric current from the above-mentioned electrode to the molten sheet product, and a control means to switch between a voltage regulation state by the above-mentioned voltage regulation means and a current regulation state by the current regulation means depending on the above-mentioned take-up speed of the molten sheet product by the movable cooling member.

11.  The sheet production apparatus of claim 10, wherein, when the take-up speed of the molten sheet product by a movable cooling member changes, a control state of the application voltage by the voltage regulation means is employed, and when the above-mentioned molten sheet product is taken up at a constant speed, a current regulation state by the current regulation means is employed.

12.  A production method of a sheet, comprising an extrusion step to extrude, in a sheet state, a thermoplastic resin having a melt specific resistance value of not less than $0.3 \times 10^8$ ($\Omega\cdot$cm) in a molten state from an extruder, a cooling step to cool the molten sheet product extruded from the extruder by bringing the product into close contact with a movable cooling member, and a draw step to draw the sheet product after cooling, for bringing the molten sheet product into static close contact with the movable cooling member by performing streamer corona discharge on the molten sheet product in the above-mentioned cooling step, from an electrode installed along the contact point between the above-mentioned molten sheet product and the movable cooling member, wherein a current regulation to control the energizing electric current from the above-mentioned electrode to the molten sheet product is applied after voltage regulation to control the voltage applied to the above-mentioned electrode in the sheet production start time, and at the time point when the sheet shifts into a stationary production state.

13.  A sheet production apparatus comprising an extruder to extrude, in a sheet state, a thermoplastic resin having a melt specific resistance value of not less than $0.3 \times 10^8$ ($\Omega\cdot$cm) in a molten state, a movable cooling member for cooling the molten sheet product extruded from the extruder, and a corona discharge part for bringing the molten sheet product into static close contact with the movable cooling member by applying streamer corona discharge to a molten sheet product, wherein a tape electrode having a thickness of 5 $\mu$m-200 $\mu$m is formed in the above-mentioned corona discharge part, the tape electrode is installed along the vicinity of the contact point between the above-mentioned molten sheet product and the movable cooling member, the gap between the tape electrode and the molten sheet product is set within the range of 0.5 mm - 10 mm, multiple protrusions having a protrusion amount of not less than 0.1 mm are arranged along the direction perpendicular to the transport direction of the above-mentioned molten sheet product, on the tip of the above-mentioned tape electrode, and the interval between adjacent protrusions is set to less than 5 times the above-mentioned gap between the tape electrode and the molten sheet product.

14.  The sheet production apparatus of claim 1, wherein dispersion in the protrusion amount of respective protrusions formed in the tape electrode is set to less than 0.2 mm.

**15.** The sheet production apparatus of claim 1 or 2, wherein an amount of misalignment between the contact point between the molten sheet product and the movable cooling member, and the installation position of the tape electrode in the sheet transport direction is set to less than 5 mm.

**16.** A sheet production method, comprising an extrusion step to extrude, in a sheet state, a thermoplastic resin having a melt specific resistance value of $0.3 \times 10^8$ ($\Omega$·cm) in a molten state from an extruder, cooling the molten sheet product extruded from the extruder, by bringing the product into close contact with a movable cooling member, and a draw step to draw the sheet product after cooling, wherein a tape electrode having a thickness of 5 $\mu$m-200 $\mu$m is installed along the vicinity of the contact point between the above-mentioned molten sheet product and the movable cooling member, and streamer corona discharge is applied to a molten sheet product in the above-mentioned cooling step from a corona discharge part wherein the gap between the tape electrode and the molten sheet product is set within the range of 0.5 mm - 10 mm, multiple protrusions having a protrusion amount of not less than 0.1 mm are arranged at the tip of the above-mentioned tape electrode, along the direction perpendicular to the transport direction of the above-mentioned molten sheet product, and the interval between adjacent protrusions is set to less than 5 times the above-mentioned gap between the tape electrode and the molten sheet product, whereby the molten sheet product is cooled by bringing the product into close contact with the movable cooling member.

# FIG. 1

# FIG. 2

# FIG. 3

FIG. 4

FIG. 5

# FIG. 6

25f

10

25, 26

25f

# FIG. 7

10B

J

10b

10b

W
W

# FIG. 8

10C

10c

W

J

# FIG. 9

10D

10d

W

J

# FIG. 10

# FIG. 11

# FIG. 12

## INTERNATIONAL SEARCH REPORT

International application No.

PCT/JP2004/017391

A.  CLASSIFICATION OF SUBJECT MATTER
Int.Cl⁷  B29C47/88, B29C47/92, B29C47/08//B29L7:00

According to International Patent Classification (IPC) or to both national classification and IPC

B.  FIELDS SEARCHED

Minimum documentation searched (classification system followed by classification symbols)
Int.Cl⁷  B29C47/00-47/96

Documentation searched other than minimum documentation to the extent that such documents are included in the fields searched
Jitsuyo Shinan Koho        1926-1996   Toroku Jitsuyo Shinan Koho   1994-2005
Kokai Jitsuyo Shinan Koho   1971-2005   Jitsuyo Shinan Toroku Koho    1996-2005

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| Y | JP 1-283124 A  (Mitsubishi Monsanto Chemical Co.), 14 November, 1989 (14.11.89), Claims; page 4, lower right column, lines 18 to 20; page 6, upper left column, lines 16 to 19; Figs. 1 to 6 (Family: none) | 1-7,13-16 |
| Y | JP 2001-341187 A  (Toray Industries, Inc.), 11 December, 2001 (11.12.01), Claims; Par. Nos. [0005], [0006], [0010], [0014], [0026], [0027], [0080]; Figs. 1 to 7 (Family: none) | 1-7,13-16 |

[X]  Further documents are listed in the continuation of Box C.          [ ]  See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 19 January, 2005 (19.01.05) | 08 February, 2005 (08.02.05) |

| Name and mailing address of the ISA/ | Authorized officer |
|---|---|
| Japanese Patent Office | |
| Facsimile No. | Telephone No. |

Form PCT/ISA/210 (second sheet) (January 2004)

**INTERNATIONAL SEARCH REPORT**

| | International application No. |
|---|---|
| | PCT/JP2004/017391 |

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2002-307532 A (Toray Industries, Inc.),<br>23 October, 2002 (23.10.02),<br>Claims; Figs. 1, 2<br>(Family: none) | 1-7,13-16 |
| Y | JP 2002-264201 A (Toray Industries, Inc.),<br>18 September, 2002 (18.09.02),<br>Claims; Figs. 1, 2<br>(Family: none) | 1-7,13-16 |
| X | JP 2001-219460 A (Unitika Ltd.),<br>14 August, 2001 (14.08.01),<br>Claims; Par. Nos. [0019] to [0021]<br>(Family: none) | 8,9 |
| X | JP 63-272527 A (Toray Industries, Inc.),<br>10 November, 1988 (10.11.88),<br>Full text<br>(Family: none) | 8,9 |
| A | JP 10-315306 A (Toray Industries, Inc.),<br>02 December, 1998 (02.12.98),<br>Claims<br>(Family: none) | 1-16 |
| A | JP 2003-127208 A (Toray Industries, Inc.),<br>08 May, 2003 (08.05.03),<br>Claims<br>(Family: none) | 1-16 |

Form PCT/ISA/210 (continuation of second sheet) (January 2004)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 376142 B
- JP 56105930 A
- JP 1283124 A
- JP 53040231 B